(19) 

Europäisches
Patentamt
European
Patent Office
Office européen
des brevets

(11) **EP 4 250 029 A1**

(12) **EUROPEAN PATENT APPLICATION**
published in accordance with Art. 153(4) EPC

(43) Date of publication:
**27.09.2023 Bulletin 2023/39**

(21) Application number: **21894309.0**

(22) Date of filing: **14.09.2021**

(51) International Patent Classification (IPC):
**G05B 19/418** *(2006.01)* **G06N 7/00** *(2023.01)*

(52) Cooperative Patent Classification (CPC):
**G05B 19/418; G06N 7/00**

(86) International application number:
**PCT/JP2021/033820**

(87) International publication number:
**WO 2022/107434 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.11.2020 JP 2020191815**

(71) Applicant: **OMRON Corporation
Kyoto 600-8530 (JP)**

(72) Inventors:
• **HATTORI, Reiko**
  **Kyoto-shi, Kyoto 600-8530 (JP)**
• **OTA, Yuya**
  **Kyoto-shi, Kyoto 600-8530 (JP)**
• **SHIBAGAKI, Saeko**
  **Kyoto-shi, Kyoto 600-8530 (JP)**
• **MINEMOTO, Toshifumi**
  **Kyoto-shi, Kyoto 600-8530 (JP)**

(74) Representative: **Becker, Eberhard
Becker Kurig & Partner
Patentanwälte mbB
Bavariastraße 7
80336 München (DE)**

(54) **PROCESS ANALYSIS DEVICE, PROCESS ANALYSIS METHOD, AND PROCESS ANALYSIS PROGRAM**

(57) A process analysis device according to the present invention comprises: a normal data acquisition unit that acquires a plurality of pieces of first state data relating to the normal state of a plurality of mechanisms constituting a production line; an abnormal data acquisition unit that acquires a plurality of pieces of second state data relating to the state of the plurality of mechanisms when an abnormality occurs; a normal period analysis unit that identifies the connection state between the plurality of mechanisms as a first connection state by analyzing the acquired plurality of pieces of first state data; an abnormal period analysis unit that identifies the connection state between the plurality of mechanisms as a second connection state by analyzing the acquired plurality of pieces of second state data; a normal period relationship identification unit that identifies the causal relationship between the plurality of mechanisms in a process carried out on the production line as a normal period causal relationship on the basis of the first connection state; an abnormal period relationship identification unit that identifies the causal relationship between the plurality of mechanisms in the process carried out on the production line as an abnormal period causal relationship

on the basis of the second connection state; and a special causal relationship identification unit that compares the normal period causal relationship and the abnormal period causal relationship and identifies the causal relationship between a plurality of the mechanisms involved in the occurrence of an abnormality as a special causal relationship.

FIG. 11

EP 4 250 029 A1

**Description**

Technical Field

The present invention relates to a process analysis device, a process analysis method, and a process analysis program.

Related Art

A production line in a factory or the like is composed of multiple mechanisms such as conveyors and robot arms. When an abnormality occurs in any mechanism of this production line, the production of the product will be stopped, possibly causing great damage. For this reason, in factories and the like, maintenance workers regularly patrol the production line to check for the occurrence of an abnormality or the sign of such abnormality.

When the occurrence of an abnormality or its sign is detected in a production line, the true cause of the abnormality may exist in a mechanism prior to the mechanism in which the abnormality was detected. Thus, it is important to understand the causal relationship of each mechanism in the production line in order to identify the true cause of the abnormality. However, because the number of mechanisms constituting a production line is large and the operating conditions of each mechanism may change from day to day, it is difficult to accurately grasp the causal relationship of all mechanisms.

Thus, conventionally, a skilled maintenance worker grasps the causal relationship between multiple mechanisms constituting the production line based on their own experience and intuition, and detects an abnormality that has occurred in the production line or a sign of it. In order to enable unskilled maintenance works to perform such maintenance work, it has been desired to develop a technique for visualizing the causal relationship between multiple mechanisms constituting a production line.

For example, the system disclosed in Patent Literature 1 acquires domain knowledge when constructing a causal relationship model. Then, the constructed causal relationship model and the domain knowledge are compared, and if there is a contradiction between the two, the causal relationship model is reconstructed.

Citation List

Patent Literature

[Patent Literature 1] JP 2018-181158 A

SUMMARY OF INVENTION

Technical problems

However, since the system described in Patent Literature 1 is based on the use of domain knowledge, which makes it difficult a non-skilled person to use, and it is also difficult to use it for newly occurring phenomena. The present invention has been made to solve the above problems, and its object is to provide a process analysis device, a process analysis method, and a process analysis program, which can easily identify the cause of the abnormality occurring in a production line, for example, even for unskilled people.

Solution to Problem

A process analysis device according to the present invention includes: a normal data acquisition unit that acquires a plurality of first state data relating to the normal state of a plurality of mechanisms constituting a production line; an abnormality data acquisition unit that acquires a plurality of second state data relating to the state of the plurality of mechanisms when an abnormality occurs; a normal period analysis unit that identifies a connection state between the plurality of mechanisms as a first connection state by analyzing the acquired plurality of first state data; an abnormal period analysis unit that identifies a connection state between the plurality of mechanisms as a second connection state by analyzing the acquired plurality of second state data; a normal period relationship identification unit that identifies a causal relationship between the plurality of mechanisms in a process carried out on the production line as a normal period causal relationship based on the first connection state; an abnormal period relationship identification unit that identifies a causal relationship between the plurality of mechanisms in a process carried out on the production line as an abnormal period causal relationship based on the second connection state; and a special causal relationship identification unit that compares the normal period causal relationship with the abnormal period causal relationship and identifies the causal relationship between the plurality of mechanisms involved in the occurrence of an abnormality as a special causal relationship.

In the above process analysis device, the normal period analysis unit and the abnormal period analysis unit respectively may be configured to: (1) calculate a feature amount from each state data, and (2) calculate a correlation coefficient or a partial correlation coefficient between each of the feature amount so as to identify the connection state between the plurality of mechanisms. The special causal relationship identification unit: calculates a degree of divergence between the feature amount in each of the mechanisms of the normal period causal relationship and the feature amount in each of the mechanisms of the abnormal period causal relationship; selects, as a node, a mechanism in which the degree of divergence is larger than a predetermined value; selects, as an edge, the connection between the mechanisms when the connection state between the mechanisms satisfies a predetermined condition when comparing the normal period causal relationship and the abnormal period causal relationship; and identifies the special causal relationship from the selected node and edge.

The above process analysis device may be configured to further include: a control program acquisition unit that acquires a control program for controlling the operation of the production line; a control program analysis unit that identifies an order relationship of the plurality of mechanisms by analyzing the acquired control program; and a constraint model generation unit that generates a constraint model of the plurality of mechanisms based on the order relationship of the plurality of mechanisms. The special causal relationship identification unit identifies the special causal relationship based on the constraint model.

The above process analysis device may further include: a mechanism data acquisition unit that acquires mechanism data relating to at least one of the relative positional relationship of devices included in each of the plurality of mechanisms and the order in which the devices are involved in the process; and a mechanism data analysis unit that identifies a process model that indicates the order relationship of the plurality of mechanisms by analyzing the acquired mechanism data and modelling the process carried out on the production line. The constraint model generation unit generates the constraint model based on the order relationship of the plurality of mechanisms and the process model.

In the above process analysis device, the control program analysis unit may identify the order relationship of the plurality of mechanisms based on log data acquired by operating the production line using the control program.

In the above process analysis device, the control program analysis unit may identify the order relationship of the plurality of mechanisms by: (1) constructing an abstract syntax tree from the control program, (2) extracting variables and conditional branches relating to each of the mechanisms from the constructed abstract syntax tree, (3) acquiring log data when the production line is operated normally using the control program, and (4) referring to the acquired log data and ordering each of the variables based on an execution result of the conditional branches.

The above process analysis device may further include: a first experimental planning data acquisition unit that acquires first experimental planning data for determining an adjustment amount of adjustment items of the production line for achieving a predetermined quality in operating the production line; and a control causal relationship generating unit that generates, as a control causal relationship, a causal relationship between the adjustment items and the mechanism as well as the causal relationship between the plurality of mechanisms based on the first experimental planning data and the constraint model.

The above process analysis device may further include: a quality adjustment causal relationship identification unit that compares the control causal relationship with the special causal relationship and identifies a quality adjustment causal relationship including the causal relationship between the plurality of mechanisms involved in the occurrence of an abnormality and the causal relationship between the mechanisms and the adjustment items.

The above process analysis device may further include: a second experimental planning data acquisition unit that acquires second experimental planning data for determining a relationship between the adjustment amount of the adjustment items identified by the quality adjustment causal relationship and the quality; and a quality prediction model generation unit that generates a quality prediction model that identifies the relationship between the adjustment amount of the adjustment items in the production line and the quality based on the second experimental planning data.

The above process analysis device may further include an adjustment amount calculation unit that calculates an adjustment amount of the adjustment items for achieving a desired quality based on the quality prediction model.

In the above process analysis device, each of the state data may indicate at least one of torque, speed, acceleration, temperature, current, voltage, air pressure, pressure, flow rate, position, dimensions, area, light intensity, and ON/OFF state.

In a process analysis method according to the present invention, a computer executes: a step of acquiring a plurality of first state data relating to the normal state of a plurality of mechanisms constituting a production line; a step of acquiring a plurality of second state data relating to the state of the plurality of mechanisms when an abnormality occurs; a step of identifying a connection state between the plurality of mechanisms as a first connection state by analyzing the acquired plurality of first state data; a step of identifying a connection state between the plurality of mechanisms as a second connection state by analyzing the acquired plurality of second state data; a step of identifying a causal relationship between the plurality of mechanisms in a process carried out on the production line as a normal period causal relationship based on the first connection state; a step of identifying a causal relationship between the plurality of mechanisms in a process carried out on the production line as an abnormal period causal relationship based on the second connection state; and a step of comparing the normal period causal relationship and the abnormal period causal relationship and identifying the causal relationship between the plurality of the mechanisms involved in the occurrence of an abnormality as a special causal relationship.

In a process analysis program according to the present invention, a computer is caused to execute: a step of acquiring a plurality of first state data relating to the normal state of a plurality of mechanisms constituting a production line; a step of acquiring a plurality of second state data relating to the state of the plurality of mechanisms when an abnormality occurs; a step of identifying a connection state between the plurality of mechanisms as a first connection state by analyzing the acquired plurality of first state data; a step of identifying a connection state between the plurality of mechanisms as a second connection state by analyzing the acquired plurality of second state data; a step of identifying a causal relationship between the plurality of mechanisms in a process carried out on the production line as a normal period causal relationship based on the first connection state; a step of identifying a causal relationship between the plurality of mechanisms in a process carried out on the production line as an abnormal period causal relationship based on the second connection state; and a step of comparing the normal period causal relationship and the abnormal period causal relationship and identifying the causal relationship between the plurality of the mechanisms involved in the occurrence of an abnormality as a special causal relationship.

Effects

According to the present invention, for example, even an unskilled person can easily identify the cause of an abnormality occurring in a production line.

BRIEF DESCRIPTION OF DRAWING

Figure 1 is a schematic diagram showing an example of an application situation of a process analysis device according to an embodiment of the present invention.
Figure 2 is an example of a block diagram showing the hardware configuration of a process analysis device.
Figure 3 is an example of a block diagram showing the hardware configuration of a PLC.
Figure 4 is an example of a block diagram showing the software configuration of a process analysis device.
Figure 5 is an example of a block diagram showing the functional configuration of a constraint model generation module.
Figure 6 is an example of a flowchart showing a processing procedure of a constraint model generation module.
Figure 7 is an example of a flowchart showing analysis processing of a control program.
Figure 8 is an example of an abstract syntax tree constructed from a control program.
Figure 9A is an example of a situation in which the ordering of variables is initialized.
Figure 9B is an example of an order relationship between multiple mechanisms identified by analysis of a control program.
Figure 10 is an example of a process of analyzing mechanism data.
Figure 11 is an example of a block diagram showing the functional configuration of an event causal relationship generation module.
Figure 12 is an example of a flowchart showing a processing procedure of an event causal relationship generation module.
Figure 13 is an example of a flowchart showing a processing procedure when analyzing state data.
Figure 14 is an example of a process of analyzing state data of normal period.
Figure 15 is an example of directed graph information showing a causal relationship between multiple mechanisms of normal period.
Figure 16 is an example of a process of analyzing of abnormal period.
Figure 17 is an example of directed graph information showing a causal relationship between multiple mechanisms of normal period.
Figure 18 is an example of a flowchart showing a processing procedure for generating an event causal relationship.
Figure 19 is a table showing an example of degree of divergence of feature amount.
Figure 20 is an example of event causal relationship.
Figure 21 is an example of a block diagram showing the functional configuration of a control causal relationship generation module.
Figure 22 is an example of a flowchart showing a processing procedure of a control causal relationship generation module.

Figure 23 is an example of a control causal relationship model.

Figure 24 is an example of a block diagram showing the functional configuration of a quality adjustment causal model generation module.

Figure 25 is a flow chart showing a processing procedure of a quality adjustment causal model generation module.

Figure 26 is a diagram showing a procedure for creating a quality adjustment causal model from the corresponding event causal model and control causal relationship model.

Figure 27 is a diagram showing a procedure for creating a quality adjustment causal model from the corresponding event causal model and control causal relationship model.

Figure 28 is a diagram showing a procedure for creating a quality adjustment causal model from the corresponding event causal model and control causal relationship model.

Figure 29 is a diagram of another example of a procedure for creating a quality adjustment causal model from the corresponding event causal model and control causal relationship model.

Figure 30 is a diagram of another example of a procedure for creating a quality adjustment causal model from the corresponding event causal model and control causal relationship model.

Figure 31 is an example of a block diagram showing the functional configuration of a quality prediction model generation module.

Figure 32 is an example of a flowchart showing a processing procedure of a quality prediction model generation module.

Figure 33 is a diagram showing another example of generation of event causal relationship.

DESCRIPTION OF EMBODIMENTS

An embodiment of a process analysis device according to the present invention will be described below with reference to the drawings.

<1. Application example>

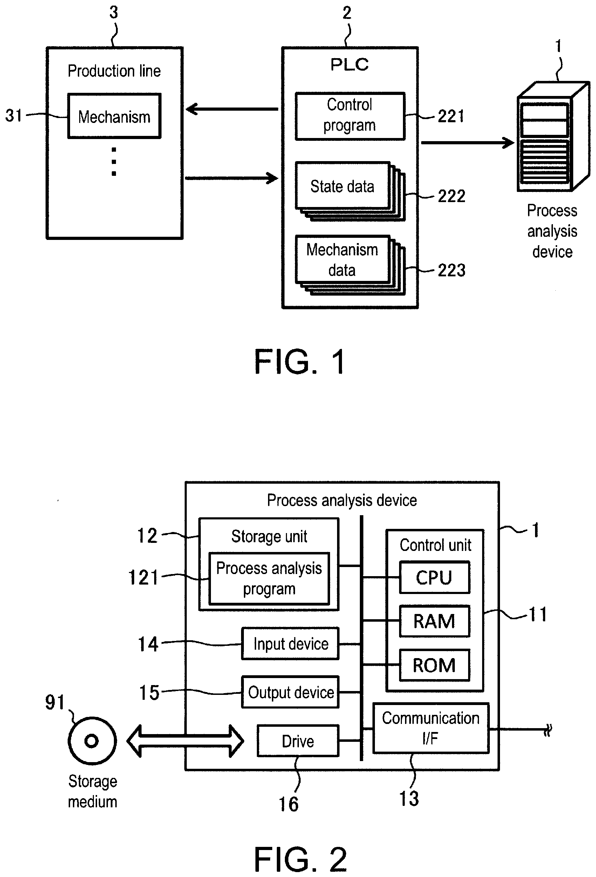

First, an example of a situation to which the present invention is applied will be described with reference to Figure 1. Figure 1 schematically illustrates an example of a usage situation of a process analysis device 1 according to this embodiment.

As shown in Figure 1, the process analysis device 1 according to this embodiment acquires multiple state data 222 and mechanism data 223 relating to the state of multiple mechanisms 31 constituting a production line 3. The production line 3 may be composed of multiple devices as long as it may manufacture any product, or may be composed of a single device such as a packaging machine. Moreover, each mechanism 31 may be composed of one or multiple devices, or may be composed of a part of a device, as long as it may carries some processing in a manufacturing process. When one mechanism 31 is part of a device, the multiple mechanisms 31 may be one device. Also, when the same device carries out multiple processings, each may be regarded as a separate mechanism 31. For example, when the same device carries out the first processing and the second processing, the device that carries out the first processing may be regarded as a first mechanism 31, and the device that carries out the second processing may be regarded as a second mechanism 31. Moreover, the state data 222 may include any kind of data relating to the status of each mechanism 31 constituting the production line 3.

Further, the process analysis device 1 according to this embodiment acquires a control program 221 for controlling the operation of the production line 3. The control program 221 may include any kind of program that controls the operation of each mechanism 31 constituting the production line 3. The control program 221 may be composed of one program, or may be composed of multiple programs. Moreover, in this embodiment, the operation of the production line 3 is controlled by a PLC (programmable logic controller) 2. Thus, the process analysis device 1 acquires multiple state data 222 and the mechanism data 223, and the control program 221 from a PLC 2.

Next, the process analysis device 1 according to this embodiment identifies the strength of relationship between the multiple mechanisms 31 in the production line 3 by statistically analyzing the acquired multiple state data 222. The strength of relationship is an example of a "connection state" in the present invention. Moreover, the process analysis device 1 according to this embodiment identifies the order relationship of the multiple mechanisms 31 in the production line 3 by analyzing the acquired control program 221 and mechanism data 223. Then, the process analysis device 1 according to this embodiment identifies the causal relationship between the multiple mechanisms 31 in the process executed in the production line 3 based on the strength of relationship and the order relationship identified.

As described above, in this embodiment, the control program 221 is used to identify the order relationship between the multiple mechanisms 31 in the process of analyzing the causal relationship between the multiple mechanisms 31. Since the control program 221 defines the operation of each mechanism 31, the order relationship of each mechanism 31 can be identified more accurately by using the control program 221. Thus, according to this embodiment, it is possible to accurately model the causal relationship between the multiple mechanisms 31 constituting the production line 3.

Further, as will be described later, when identifying the strength of relationship between the mechanisms 31 using the state data 222, two causal relationships are acquired, using the state data 222 when the production line 3 is operated normally and using the state data 222 when the production line 3 is operated in the state when an abnormality occurs, and by comparing these causal relationships, an event causal relationship model is generated that extracts only the mechanism 31 involved in the occurrence of an abnormality.

<2. Hardware configuration of process analysis device>

Next, an example of the hardware configuration of the process analysis device 1 according to this embodiment will be described using Figure 2. Figure 2 schematically illustrates an example of the hardware configuration of the process analysis device 1 according to this embodiment.

As shown in Figure 2, the process analysis device 1 according to this embodiment is a computer to which a control unit 11, a storage unit 12, a communication interface 13, an input device 14, an output device 15, and a drive 16 are electrically connected. Moreover, in Figure 2, the communication interface is described as "communication I/F."

The control unit 11 includes a CPU (Central Processing Unit), which is a hardware processor, RAM (Random Access Memory), ROM (Read Only Memory), etc., and controls each component according to information processing. The storage unit 12 is, for example, an auxiliary storage device such as a hard disk drive or solid state drive, and stores a process analysis program 121 and the like executed by the control unit 11,

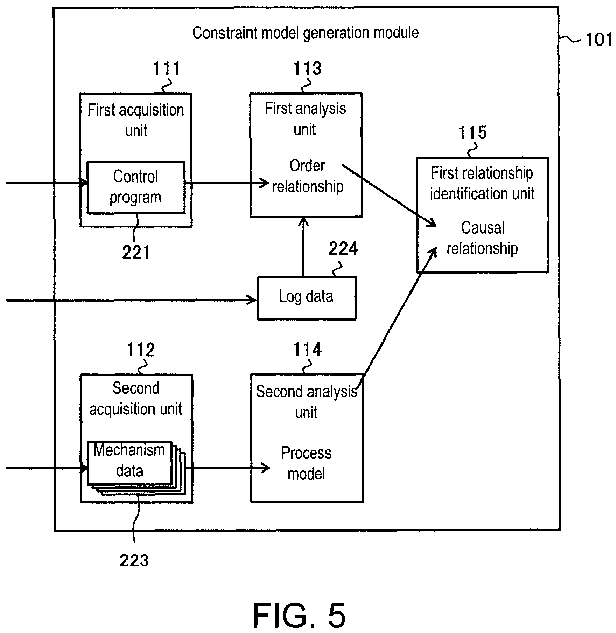

The process analysis program 121 is a program for causing the process analysis device 1 to execute the later-described processings (Figure 5) for analyzing the causal relationship between the multiple mechanisms 31 in the manufacturing process carried out by the production line 3 by using the multiple state data 222 and the mechanism data 223, and the control program 221. Details will be described later.

The communication interface 13 is, for example, a wired LAN (Local Area Network) module, a wireless LAN module, or the like, and is an interface for performing wired or wireless communication via a network. The process analysis device 1 may perform data communication with the PLC 2 via the network by using the communication interface 13. Moreover, the type of network may be appropriately selected from, for example, the Internet, wireless communication network, mobile communication network, telephone network, dedicated network, and the like.

The input device 14 is, for example, a device for performing input such as a mouse and a keyboard. Also, the output device 15 is, for example, a device for outputting such as a display and a speaker. An operator may operate the process analysis device 1 via the input device 14 and the output device 15.

The drive 16 is, for example, a CD drive, a DVD drive, or the like, and is a drive device for reading programs stored in a storage medium 91. The type of the drive 16 may be appropriately selected according to the type of the storage medium 91. The above process analysis program 121 may be stored in this storage medium 91.

The storage medium 91 is a medium for storing information such as programs by electric, magnetic, optical, mechanical or chemical actions, such that the information such as programs of computers or other devices and machines may be read. The process analysis device 1 may acquire the above process analysis program 121 from the storage medium 91.

Here, in Figure 2, as an example of the storage medium 91, a disk-type storage medium such as a CD or DVD is illustrated. However, the type of the storage medium 91 is not limited to the disk type, and may be other than the disk type. As a storage medium other than the disk type, for example, a semiconductor memory such as a flash memory may be cited.

Regarding the specific hardware configuration of the process analysis device 1, components may be omitted, replaced, and added as appropriate according to the embodiment. For example, the control unit 11 may include multiple processors. The process analysis device 1 may be composed of multiple information processing devices. Further, the process analysis device 1 may be an information processing device designed exclusively for the service provided, or may be a general-purpose server device, a PC (Personal Computer), or the like.

<3. PLC>

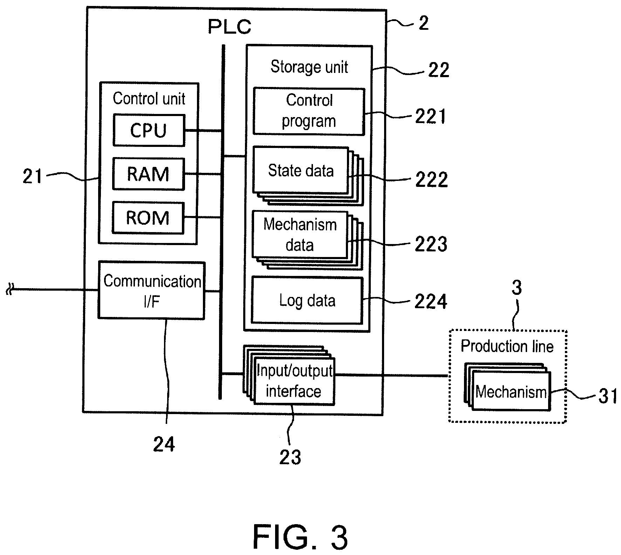

Next, an example of the hardware configuration of the PLC 2 which controls operation/movement of the production line 3 is illustrated using Figure 3. Figure 3 schematically illustrates an example of the hardware configuration of the PLC 2 according to this embodiment.

As shown in Figure 3, the PLC 2 is a computer to which a control unit 21, a storage unit 22, an input/output interface 23, and a communication interface 24 are electrically connected. Thereby, the PLC 2 is configured to control the operation of each mechanism 31 of the production line 3. Moreover, in Figure 3, the input/output interface and the communication interface are indicated as "input/output I/F" and "communication I/F", respectively.

6

The control unit 21 includes a CPU, RAM, ROM, etc., and is configured to execute various types of information processing based on programs and data. The storage unit 22 is composed of, for example, RAM, ROM, etc., and stores the control program 221, the state data 222, the mechanism data 223, log data 224, and the like. The control program 221 is a program for controlling the operation of the production line 3. The state data 222 is data relating to the state of each mechanism 31. The mechanism data 223 is data relating to at least one of the relative positional relationship of the devices included in each of the multiple mechanisms 31 and the order in which the devices are involved in the process. Moreover, as the mechanism data 223, for example, a device list, a sensor list for monitoring the operation of the device, information indicating the order of processes, information indicating the installation position of the sensor, and the like may be used. Further, the log data 223 is data indicating a log of the operation of the production line 3.

The input/output interface 23 is an interface for connecting with an external device, and is appropriately configured according to the external device to be connected. In this embodiment, the PLC 2 is connected to the production line 3 via the input/output interface 23. Moreover, when different state data may be acquired for a single device, the single target device may be regarded as the multiple mechanisms 31 or may be regarded as a single mechanism 31. Thus, the number of input/output interfaces 23 may be the same as the number of mechanisms 31 constituting the production line 3 or may be different from the number of mechanisms 31 constituting the production line 3.

The communication interface 24 is, for example, a wired LAN module, a wireless LAN module, or the like, and is an interface for performing wired or wireless communication. The PLC 2 may perform data communication with the process analysis device 1 through the communication interface 24.

Further, regarding the specific hardware configuration of the PLC 2, components maybe appropriately omitted, replaced, and added according to the embodiment. For example, the control unit 21 may include multiple processors. The storage unit 22 may be composed of RAM and ROM included in the control unit 21. The storage unit 22 may be composed of an auxiliary storage device such as a hard disk drive or solid state drive. Further, the PLC 2 may be replaced with a general-purpose desktop PC, tablet PC, or the like, according to the object to be controlled, in addition to an information processing device designed exclusively for the service provided.

<4. Software configuration of process analysis device>

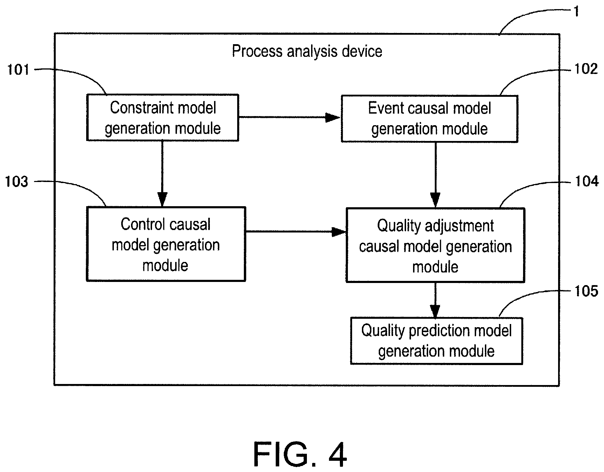

Next, an example of the software configuration of the process analysis device 1 according to this embodiment will be described using Figure 4. Figure 4 schematically illustrates an example of the software configuration of the process analysis device 1 according to this embodiment.

The control unit 11 of the process analysis device 1 expands the process analysis program 121 stored in the storage unit 12 to RAM. Then, the control unit 11 interprets and executes out the process analysis program 121 expanded in the RAM by the CPU to control each component. As a result, as shown in Figure 4, the process analysis device 1 according to this embodiment includes, as software modules, a constraint model generation module 101, an event causal model generation module 102, a control causal model generation module 103, a quality adjustment causal model generation module 104, and a quality prediction model generation module 105. These will be described in order below.

<4-1. Constraint Model Generation Module>

<4-1-1. Configuration of Constraint Model Generation Module>

First, the constraint model generation module 101 will be described. As shown in Figure 5, the constraint model generation module 101 further has, as functional blocks, a first acquisition unit (control program acquisition unit) 111, a second acquisition unit (mechanism data acquisition unit) 112, a first analysis unit (control program analysis unit) 113, a second analysis unit (mechanism data analysis unit) 114, and a first relationship identification unit (constraint model generation unit) 115.

The first acquisition unit 111 acquires the control program 221 for controlling the operation of the production line 3. The first analysis unit 113 identifies the order relationship of the multiple mechanisms 31 by analyzing the acquired control program 221. In this embodiment, the first analysis unit 113 uses the log data 224 acquired by executing the control program 221 to identify the order relationship of the multiple mechanisms 31. As described above, the second acquisition unit 112 acquires data relating to the relative positional relationship and the like of the devices included in each of the multiple mechanisms 31. The second analysis unit 114 identifies the process model by analyzing the acquired mechanism data 223. Then, the first relationship identification unit 115 identifies causal relationship between the mechanisms 31 in the process carried out on the production line 3 based on the identified order relationship and process model respectively.

Each functional configuration 111 to 115 of the process analysis device 1 will be described in detail in operation examples to be described later. In this embodiment, an example in which each software module of the process analysis device 1 is implemented by a general-purpose CPU is described. However, some or all of the above software modules may be implemented by one or more dedicated hardware processors. Further, regarding the software configuration of the process analysis device 1, software modules may be appropriately omitted, replaced, and added according to the embodiment. This also applies to modules 102 to 105 to be described later.

<4-1-2. Operation of Constraint Model Generation Module>

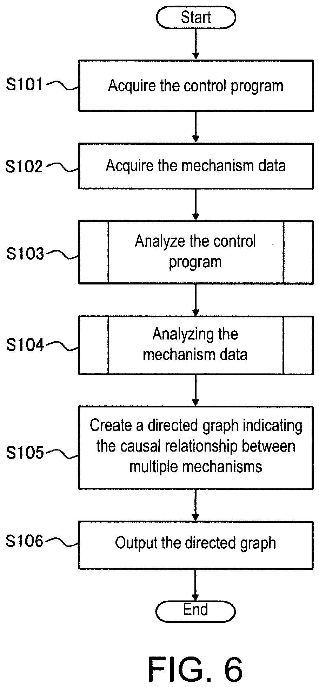

Next, an operation example of the constraint model generation module 101 will be described with reference to Figure 6. Figure 6 illustrates an example of a processing procedure of a constraint model generation module. However, the processing procedure described below is merely an example, and each processing may be modified as much as possible. Moreover, with respect to the processing procedure described below, steps may be omitted, replaced, and added as appropriate according to the embodiment. This also applies to the operations of modules 102 to 105 to be described later.

[Step S101]

In the next step S101, the control unit 11 operates as the first acquisition unit 111 and acquires the control program 221 from the PLC 2. The control program 221 may be written using at least one of at least one of, for example, a ladder diagram language, a function block diagram language, a structured text language, an instruction list language, a sequential function chart language, and C language so as to be executed by the PLC 2. When the acquisition of the control program 221 is completed, the control unit 11 advances the processing to the next step S102.

[Step S102]

In the next step S102, the control unit 11 operates as the second acquisition unit 112 and acquires the above mechanism data 223 from the PLC 2. When the acquisition of the mechanism data 223 is completed, the control unit 11 advances the processing to the next step S103. Moreover, step S102 may be executed in parallel with the above step S101, or may be executed before the above step S101.

[Step S103]

In step S103, the control unit 11 operates as the first analysis unit 113 and identifies the order relationship of the multiple mechanisms 31 in the production line 3 by analyzing the control program 221 acquired in step S101. In this embodiment, the control unit 11 identifies the order relationship of the multiple mechanisms 31 based on the log data 223 acquired by operating the production line 3 using the control program 221. When the analysis processing of the control program 221 is completed, the control unit 11 advances the processing to the next step S104. Moreover, step S103 may be executed at any timing after the above step S101. For example, when the above step S102 is executed before the above step S101, step S103 may be executed before the above step S102.

<Control program analysis processing>

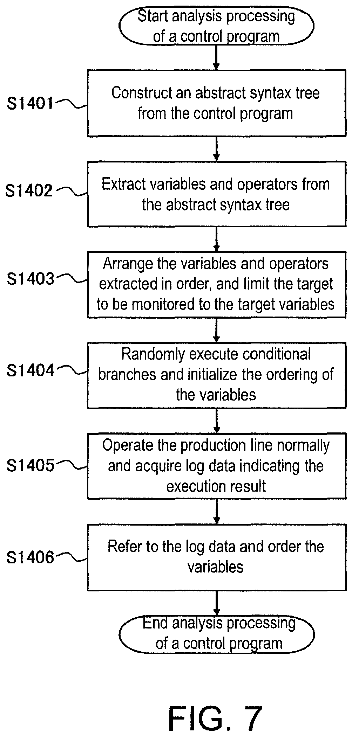

Here, the processing of analyzing the control program 221 will be described in detail with reference to Figure 7. Figure 7 illustrates an example of the procedure of processing for analyzing the control program 221. In the following description, for convenience of explanation, as above, the production line 3 includes four mechanisms F1 to F4 as the multiple mechanisms 31, and in the above step S101, it is assumed that the control unit 11 acquires the control program 221 using variables v1 to v4 corresponding to the four mechanisms F1 to F4.

(Step S1401)

First, in step S1401, the control unit 11 parses the acquired control program 221 and constructs an abstract syntax tree from the control program 221. Known parsing methods by top-down parsing or bottom-up parsing may be used to construct the abstract syntax tree. For example, the construction of an abstract syntax tree may use a parser that handles strings according to a particular formal grammar. When the construction of the abstract syntax tree is completed, the control unit 11 advances the processing to the next step S1402.

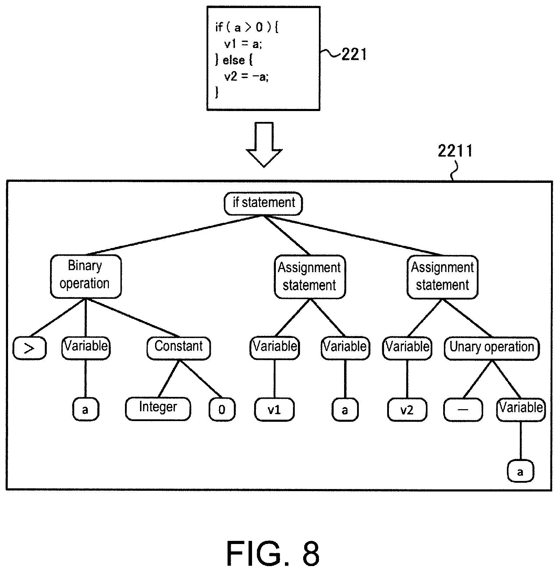

Figure 8 illustrates an abstract syntax tree 2211 acquired from the syntax "if(a>0)[v1=a;]else[v2=-a;]" in the control program 221. As exemplified in Figure 8, the abstract syntax tree is a data structure representing the structure of the program in a tree structure in order to interpret the meaning of the program.
To be specific, among the tokens (lexical texts) used in the program, the control unit 11 omits tokens such as parentheses that are not necessary for interpreting the meaning of the program and extracts tokens that are relating to the interpretation of the meaning of the program. Then, the control unit 11 associates an operator such as a conditional branch with a node, and an operand such as a variable with a leaf. By parsing the control program 221 in this manner, the control unit 11 may construct an abstract syntax tree illustrated in Figure 8. Moreover, the abstract syntax tree constructed in this manner represents the relationship between variables, operators, and nodes (relationship between operations and operands, etc.). The structure of this abstract syntax tree may be appropriately amended, modified, omitted, etc., as long as the indicated contents remain unchanged.

(Step S1402)

In the next step S1402, the control unit 11 extracts variables (V1 to V4) relating to each mechanism 31 and operators including conditional branches and assignment operations from the abstract syntax tree constructed in step S1401. For example, when the abstract syntax tree 2211 shown in Figure 8 is acquired, the control unit 11 extracts ("if', "v1", "=", "a", "v2", "=", and "-a") from the abstract syntax tree 2211. When the extraction is completed, the control unit 11 advances the processing to the next step S1403.

(Steps S1403 and S1404)

In the next step S1403, the control unit 11 arranges the variables and operators extracted in step S1402 in order, and limits the target object whose execution order is to be monitored to the parts relating to the variables (v1 to v4) corresponding to each mechanism 31 whose causal relationship is to be identified. In the above example, the control unit 11 further extracts ("if', "v1", and "v2") from ("if', "v1", "=", "a", "v2", "=". and "-a").

Then, in the next step S1404, by randomly selecting conditional branches and executing the control program 221 by trial, the ordering of the limited variables is initialized. To be specific, the control unit 11 may initialize the ordering of the variables by monitoring the order in which the limited variables are used in the trial execution of the control program 221.

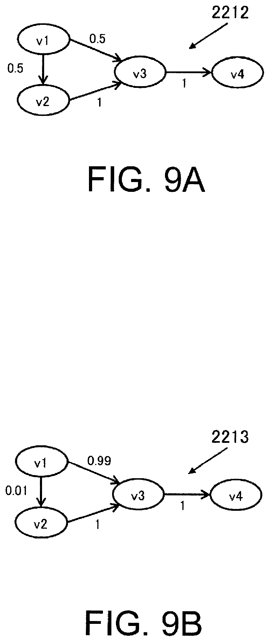

Figure 9A illustrates an example of such initialization. A graph 2212 in Figure 9A shows the order relationship of the following (1) to (5) as a result of initialization.

(1) Variable "v1" is used first among variables "v1" to "v4".
(2) After variable "v1", variable "v2" is used with a probability of 0.5, and variable "v3" is used with a probability of 0.5.
(3) After variable "v2", variable "v3" is used with a probability of 1.
(4) After variable "v3", variable "v4" is used with a probability of 1.
(5) Of the variables "v1" to "v4", the variable "v4" is used last.

When such initialization is completed, the control unit 11 advances the processing to the next step S1405.

(Step S1405)

In the next step S1405, the control unit 11 acquire the log data 223 indicating the execution result when the production line 3 is operated normally using the control program 221 from the PLC 2. For example, when collecting the above state data 222, the PLC 2 may also create the log data 223 indicating execution result of the control program 221. In this case, the log data 223 records time stamps, values of variables used, and the like. Further, for example, the control program 221 may be provided with a debug mode for collecting information such as how often each line of code is executed, which lines of code are executed, computation time consumed by each section of code, and so on. In this case, the PLC 2 may create the log data 223 that records each piece of information by executing the control program 221 in debug mode. The control unit 11 may acquire the log data 223 created in this way from the PLC 2. When the acquisition of the log data 223 is completed, the control unit 11 advances the processing to the next step S1406.

(Step S1406)

In the next step S1406, the control unit 11 refers to the log data 223 acquired in step S1405, and identifies the order relationship of each mechanism 31 in the production line 3 by ordering the above variables (v1 to v4) based on the execution result of the conditional branches.

Figure 9B illustrates an example of the result of such ordering. A graph 2213 in Figure 9B shows the order relationship of the following (A) to (E) as a result of ordering using the log data 223.

(A) Variable "v1" is used first among variables "v1" to "v4".
(B) After variable "v1", variable "v2" is used with a probability of 0.01, and variable "v3" is used with a probability of 0.99.

(C) After variable "v2", variable "v3" is used with a probability of 1.
(D) After variable "v3", variable "v4" is used with a probability of 1.
(E) Variable "v4" is used last among variables "v1" to "v4".

When the order relationship of the multiple mechanisms 31 is identified as described above, the analysis processing of the control program 221 according to this embodiment is completed, and the control unit 11 advances the processing to the next step S104.

[Step S104]

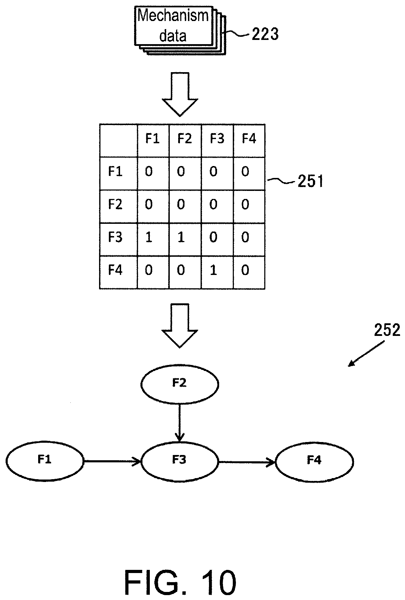

In step S104, the control unit 11 operates as the second analysis unit 114, and identifies a process model 252 by analyzing the mechanism data 223 acquired in step S102, as shown in Figure 10, for example. For example, the control unit 11 refers to the mechanism data 223 to identify the order relationship between the two mechanisms 31, and inputs the identified result to the corresponding cell of the table 251 showing the relationship between the two mechanisms 31. By completing this table 251, the control unit 11 may identify the process model 252, which is a directed graph. When the analysis processing of the control program 221 is completed, the control unit 11 advances the processing to the next step S105. Moreover, step S104 may be executed at any timing after the above step S102. For example, when the above step S102 is executed before the above step S101, step S104 may be executed before the above step S101.

[Step S105]

Returning to Figure 6, in the next step S105, the control unit 11 operates as the first relationship identification unit 115. That is, the control unit 11 identifies the causal relationship between the multiple mechanisms 31 in the process carried out on the production line 3 based on the order relationship between the multiple mechanisms 31 in the production line 3 and the process model 252 identified in steps S103 and S104, respectively.

In this embodiment, the control unit 11 identifies the causal relationship between the multiple mechanisms 31 in the process carried out on the production line 3 based on the order relationship of the mechanisms 31 identified in the above step S1406 and the process model 252 identified in the above step S104. For example, whether or not there is a relationship between the mechanisms 31 may be identified by the product of the order relationship of each mechanism 31 and the process model 252. Then, a constraint model is generated by layering and ordering the nodes based on the presence or absence of the relationship.

[Step S106]

At the next step S106, the control unit 11 outputs the constraint model created in step S105. For example, the control unit 11 outputs the created constraint model in an image format to the output device 15 such as a display. With the above, the control unit 11 ends the processing according to this operation example.

<4-2. Event causal relationship generation module>

<4-2-1. Configuration of Event Causal Relationship Generation Module>

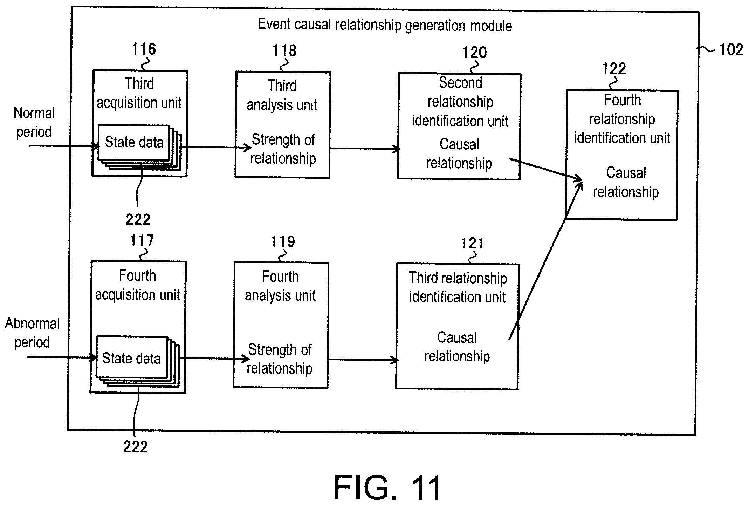

Next, the event causal relationship generation module 102 will be described. As shown in Figure 11, the event causal generation module further has, as functional blocks, a third acquisition unit 116, a fourth acquisition unit 117, a third analysis unit 118, a fourth analysis unit 119, a second relationship identification unit 120, a third relationship identification unit 121, and a fourth relationship identification unit 122.

The third acquisition unit 116 acquires multiple state data 222 relating to the state of the multiple mechanisms 31 constituting the production line 3. At this time, the acquired state data 222 is data when the production line 3 is operated normally. Similarly to the third acquisition unit 116, the fourth acquisition unit 117 also acquires multiple state data 222 relating to the state of the mechanisms 31, but the fourth acquisition unit 117 acquires state data when an abnormality occurs in the production line 3. The third analysis unit 118 and the fourth analysis unit 119 both identify the strength of relationship between the multiple mechanisms 31 by statistically analyzing the acquired multiple state data 222.

The second relationship identification unit 120 identifies a normal period causal relationship between the multiple mechanisms 31 in the process carried out on the production line 3 based on the analysis result of the third analysis unit 118 and the above constraint model. The third relationship identification unit 120 identifies an abnormal period causal relationship between the multiple mechanisms 31 in the process carried out on the production line 3 based on the analysis result of the fourth analysis unit 119 and the above constraint model. The fourth relationship identification unit 122 generates an event causal model, that is, a causal relationship specializing in identifying the cause of an abnormality (event) that has occurred from the normal period causal relationship and the abnormal period causal relationship generated by the second relationship identification unit 120 and the third relationship identification unit 121.

<4-2-2. Operation example of the event causal relationship generation module>

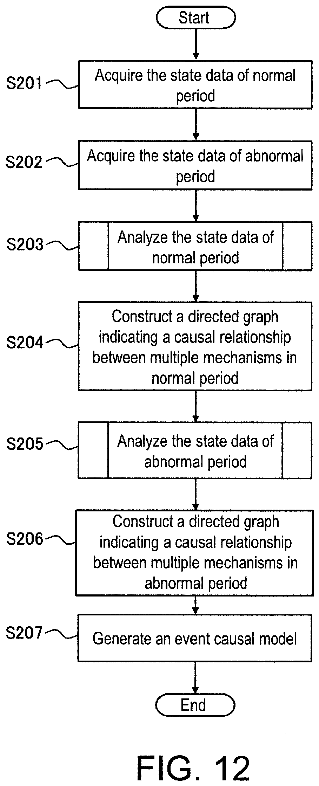

Next, an operation example of the event causal relationship generation module 102 will be described with reference to Figure 12. Figure 12 illustrates an example of the processing procedure of the event causal relationship generation module.

[Step S201]

First, in step S201, the control unit 11 operates as the third acquisition unit 116 and acquires the multiple state data 222 relating to the status of each mechanism 31 from the PLC 2. Each mechanism 31 may be composed of, for example, a conveyor, a robot arm, a servomotor, a cylinder (molding machine, etc.), a suction pad, a cutter device, a sealing device, or a part of the device. Moreover, each mechanism 31 may be a composite device such as a printer, a mounting machine, a reflow furnace, or a substrate inspection device. Further, in addition to the devices accompanying certain physical actions as described above, each mechanism 31 may include, for example, devices for performing internal processing such as a device for detecting certain information by various sensors, a device for acquiring data from various sensors, a device for detecting certain information based on the acquired data, and a device for processing the acquired data. As a specific example, in a production line equipped with an optical sensor that detects marks given to an object flowing on a conveyor, the optical sensor and the device that uses information detected by the optical sensor may be treated as each mechanism 31. Each state data 222 may be, for example, data indicating at least one of torque, speed, acceleration, temperature, current, voltage, air pressure, pressure, flow rate, position, dimensions (height, length, width), area, light intensity, and ON/OFF state. Such state data 222 may be acquired by known measuring devices such as sensors and cameras. For example, flow rate may be acquired by a float sensor. Also, the position, size, and area may be acquired by an image sensor.

Moreover, the state data 222 may be composed of data acquired from one or more measuring devices. The state data 222 may be data acquired from the measuring device as it is, or data that may be acquired by applying some processing to the data acquired from the measuring device, such as position data acquired from image data. Each state data 222 is acquired corresponding to each mechanism 31.

Each measuring device is appropriately arranged so as to be able to monitor each mechanism 31 of the production line 3. The PLC 2 operates the production line 3 and collects each state data 222 from each measuring device. The control unit 11 acquires the state data 222 relating to the state of each mechanism 31 when the production line 3 is operated normally from the PLC 2. Thereby, the control unit 11 may acquire multiple state data 222. When the acquisition of the multiple state data 222 of normal period state is completed, the control unit 11 advances the processing to the next step S202.

[Step S202]

In step S202, the control unit 11 operates as the fourth acquisition unit 117 and acquires multiple state data 222 relating to the state of each mechanism 31 from the PLC 2. The difference from the operation of the third acquisition unit 116 in step S201 is that the state data 222 relating to the state of each mechanism 31 when the production line 3 is operated when an abnormality occurs is acquired. When the acquisition of the multiple state data 222 of abnormal period state is completed, the control unit 11 advances the processing to the next step S203.

[Step S203]

In step S203, the control unit 11 operates as the third analysis unit 118, and identifies the strength of relationship between the multiple mechanisms 31 in the production line 3 by statistically analyzing the multiple state data 222 acquired in step S201. When the analysis processing of the multiple state data 222 is completed, the control unit 11 advances the processing to the next step S204. Moreover, this step S203 may be executed at any timing after the above step S201. For example, the step S203 may be executed before the above step S202.

<Analysis processing of state data>

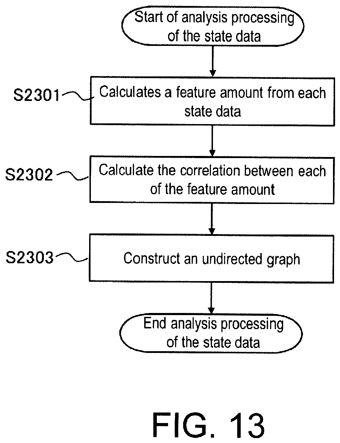

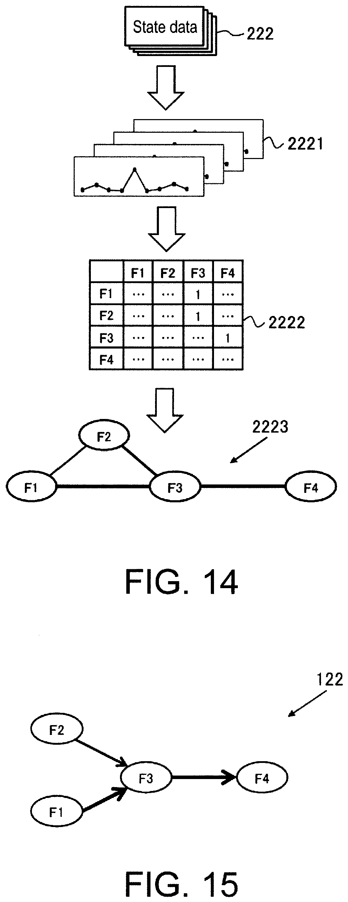

Here, the process of statistically analyzing the multiple state data 222 will be described in detail with reference to Figure 13 and Figure 14. Figure 13 illustrates an example of a procedure of processing for analyzing the state data 222 of normal period state. Figure 14 schematically illustrates an example of the processing of analyzing the state data 222 according to the procedure shown by Figure 13. In the following description, for convenience of explanation, the production line 3 includes four mechanisms (for example, four servo motors) F1 to F4 as the multiple mechanisms 31, and in the above step S101, it is assumed that the control unit 11 has acquired the state data 222 of each of the mechanisms F1 to F4.

(Step S2301)

First, in step S2301, the control unit 11 calculates a feature amount 2221 from each state data 222 acquired in step S201. The type of the feature amount 2221 may not be particularly limited, and may be appropriately selected according to the embodiment. Moreover, the method of calculating the feature amount 2221 may be determined as appropriate according to the embodiment.

As a specific example, in this embodiment, the control unit 11 calculates the feature amount 2221 from the state data 222 by the following method. First, the control unit 11 divides the acquired state data 222 for each frame in order to define the processing range for calculating the feature amount 2221. The length of each frame may be set as appropriate according to the embodiment.

For example, the control unit 11 may divide each state data 222 into frames having a certain length of time. However, the production line 3 does not necessarily operate at regular time intervals. Thus, if each state data 222 is divided into frames of a certain length of time, there is a possibility that the operation of each mechanism 31 reflected in each frame may deviate.

Thus, the control unit 11 may divide the state data 222 into frames for each takt time. The takt time is the time required for the production line 3 to produce a predetermined number of products. This takt time may be identified based on a signal that controls the production line 3, for example, a control signal that the PLC 2 controls the operation of each mechanism 31 of the production line 3.

The relationship between the control signal and the takt time will be described with reference to Figure 15. Figure 15 schematically illustrates the relationship between the control signals and the takt time. As shown in Figure 15, the control signal for the production line 3 that repeats product production is a pulse signal in which "on" and "off" appear periodically according to the production of a predetermined number of products.

Thus, the control unit 11 may acquire this control signal from the PLC 2 and set the time from the rise ("on") of the acquired control signal to the next rise ("on") as the takt time. Then, as illustrated in Figure 15, the control unit 11 may divide the state data 222 into frames for each takt time.

Next, the control unit 11 calculates the value of the feature amount 2221 from each frame of the state data 222. In a case where the state data 222 is continuous value data such as measurement data, the control unit 11 may, for example, calculate amplitude, maximum value, minimum value, average value, variance value, standard deviation, instantaneous value (one point sample) or the like in the frame as the feature amount 2221. Moreover, in a case where the state data 222 is discrete value data such as detection data, the control unit 11, for example, may calculate the "on" time, the "off" time, the duty ratio, the number of "on" times, the number of "off" times, or the like in each frame as the feature amount 2221. Thereby, when the calculation of each feature amount 2221 is completed, the control unit 11 advances the processing to the next step S2302.

(Step S2302)

Returning to Figure 13 and Figure 14, the description continues. In step S2302, the control unit 11 calculates a correlation coefficient or a partial correlation coefficient between each of the feature amount 2221. The correlation coefficient may be calculated by the following calculation formula Number 1. Moreover, the partial correlation coefficient may be calculated by the following calculation formula Number 2.

[Number 1]

$$r_{ij} = \frac{\sum_{k=1}^{n} (x_i(k) - X_i)(x_j(k) - X_j)}{\sqrt{\left(\sum_{k=1}^{n} (x_i(k) - X_i)^2\right)\left(\sum_{k=1}^{n} (x_j(k) - X_j)^2\right)}}$$

Moreover, $r_{ij}$ indicates the element of the i-th row and the j-th column of a matrix 2222. $x_i$ and $x_j$ correspond to data indicating the feature amount 2221 calculated from each state data 222. $X_i$ and $X_j$ denote sample means of $x_i$ and $x_j$ respectively. n indicates the number of each feature amount 2221 used for correlation calculation.

[Number 2]

$$r_{ij \cdot rest} = \frac{-r^{\cdot ij}}{\sqrt{r^{\cdot ii} r^{\cdot jj}}}$$

Moreover, the inverse matrix of the matrix R ($r_{ij}$) is expressed as $R^{-1}$ ($r^{ij}$), where $r^{ij}$ indicates the i-th row and j-th column element of the inverse matrix of the matrix 2222.

As a result, the control unit 11 may acquire the matrix 2222 with the correlation coefficient or the partial correlation coefficient as each element. The correlation coefficient and partial correlation coefficient between the each of the feature amount 2221 indicate the strength of relationship between the corresponding mechanisms 31. That is, the strength of relationship between corresponding mechanisms 31 is identified by each element of the matrix 2222. When the calculation of the correlation coefficient or partial correlation coefficient between each of the feature amount 2221 is completed, the control unit 11 advances the processing to the next step S2303.

(Step S2303)

In the next step S2303, the control unit 11 constructs undirected graph information 2223 indicating the strength of relationship between the corresponding mechanisms 31 based on the correlation coefficient or partial correlation coefficient between each of the feature amount 2221.

For example, the control unit 11 creates a node corresponding to each mechanism 31. Then, in a case where the value of the correlation coefficient or the partial correlation coefficient calculated between two mechanisms 31 is equal to or larger than a threshold value, the control unit 11 connects two corresponding nodes with an edge. On the other hand, in a case where the value of the correlation coefficient or partial correlation coefficient calculated between two mechanisms 31 is smaller than the threshold value, the control unit 11 does not connect the two corresponding nodes with an edge. Moreover, the threshold value may be a fixed value defined in the process analysis program 121, or may be a set value that may be changed by an operator or the like. Further, the thickness of the edge may be determined according to the value of the corresponding correlation coefficient or partial correlation coefficient.

As a result, the undirected graph information 2223 as illustrated in Figure 14 may be created. In the example of Figure 14, four nodes corresponding to the four mechanisms F1 to F4 are created. And, edges are formed between the nodes of the mechanisms F1 and F2, between the nodes of the mechanisms F1 and F3, between the nodes of the mechanisms F2 and F3, and between the nodes of the mechanisms F3 and F4. Also, corresponding to the fact that the correlations between the mechanisms F1 and F3 and between the mechanisms F3 and F4 are greater than the correlations between other mechanisms, the edges between the nodes of the mechanisms F1 and F3 and between the nodes of the mechanisms F3 and F4 are thicker than other edges. When the construction of the undirected graph information 2223 indicating the strength of relationship between the multiple mechanisms 31 is completed as described above, the analysis processing of the state data 222 according to this embodiment is completed, and the control unit 11 advances the processing to the next step S204.

Further, in the example of Figure 14, the undirected graph information 2223 represents the formed undirected graph with an image. However, the output format of the undirected graph information 2223 need not be limited to images, and may be represented by text or the like. Further, in the above example, an edge is formed between weakly related nodes (mechanisms 31) by comparing the correlation coefficient or the partial correlation coefficient with the threshold value. However, the method of removing the edge between weakly related nodes need not be limited to this example. For example, after forming a graph in which all nodes are connected by edges, the control unit 11 may delete the edge of the formed graph in order from the edges with small correlation coefficient or partial correlation coefficient such that the fit index (GFI, SRMR, etc.) representing the degree of deviation does not exceed the threshold value.

[Step S204]

Returning to Figure 12, the control unit 11 operates as the second relationship identification unit 120 in step S204. That is, based on the above constraint model and the strength of relationship between the multiple mechanisms 31 in the production line 3 identified in step S2303, the control unit 11 identifies the normal period causal relationship between the multiple mechanisms 31 in the process carried out on the production line 3.

In this embodiment, the control unit 11 creates directed graph information indicating the causal relationship between the mechanisms 31 by applying the order relationship of the mechanisms 31 identified in the above constraint model to the undirected graph information 2223 constructed in the above step S2303. At this time, the control unit 11 identifies an order (transition) in which the occurrence probability in the order relationship of each mechanism 31 is lower than a threshold value, and deletes the edge corresponding to the identified order from the edges forming the undirected graph information 2223. Moreover, the threshold value may be a fixed value defined in the process analysis program 121 or a set value that may be changed by an operator.

Figure 15 illustrates an example of created directed graph information. A directed graph 122 in Figure 15 shows the causal relationship of the following (a) to (d).

(a) The mechanism "F1" or "F2" is used first among the mechanisms "F1" to "F4".
(b) After the mechanism "F3", the mechanisms "F1" and "F2" are used.
(c) After the mechanism "F3", the mechanism "F4" is used.
(d) The mechanism "F4" is used last among the mechanisms "F1" to "F4".

Moreover, in the example of Figure 15, the existing edge between the mechanisms "F1 " and "F2" is deleted in the undirected graph information 2223 in response to the low occurrence probability of the sequence from variables "v1" to "v2". Also, the thickness of each edge of the directed graph 122 is set corresponding to the thickness of each edge of the undirected graph information 2223. When the creation of the directed graph information is completed as described above, the control unit 11 advances the processing to the next step S206.

Further, in the example of Figure 15, the directed graph information represents the directed graph (the directed graph 122) with an image. However, the output format of directed graph information need not be limited to images, and may be represented by text or the like. Further, in the above example, the strength of relationship between nodes (mechanisms 31) is represented by an edge thickness. However, the method of representing the strength of relationship between the nodes need not be limited to such examples. The strength of relationship between the nodes may be represented by attaching a number near each edge.

[Step S205]

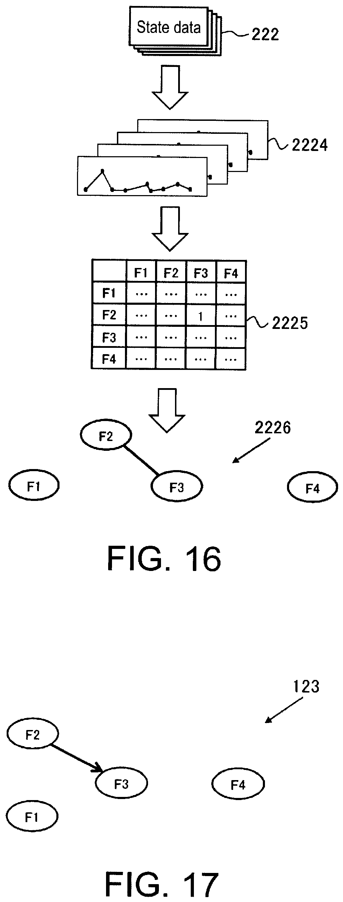

In step S205, the control unit 11 operates as the fourth analysis unit 119, and identifies the strength of relationship between the multiple mechanisms 31 in the production line 3 by statistically analyzing the multiple state data 222 of abnormal period acquired in step S202. Except that the state data 222 to be used is different from that of the third analysis unit 118, the processing in step S205 is the same as that in step S203, so detailed description will be omitted. Since the fourth analysis unit 119 uses the state data of abnormal period, for example, undirected graph information 2226 as shown in Figure 16 is generated.

[Step S206]

In step S206, the control unit 11 operates as the third relationship identification unit 121. That is, based on the above constraint model and the strength of relationship between the multiple mechanisms 31 in the production line 3 identified in step S205, the control unit 11 identifies the abnormal period causal relationship between the multiple mechanisms 31 in the process carried out on the production line 3. Since the processing procedure is the same as the method shown in step S204, detailed description is omitted. For example, directed graph information 123 as shown in Figure 17 is generated.

[Step S207]

In step S207, the control unit 11 operates as the fourth relationship identification unit 122. That is, the control unit 11 generates an event causal model from the directed graph information 122 of normal period shown in Figure 15 and the directed graph information 123 of abnormal period shown in Figure 17.

(Generation processing of event causal model)

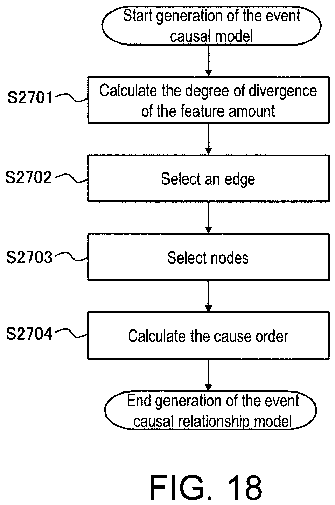

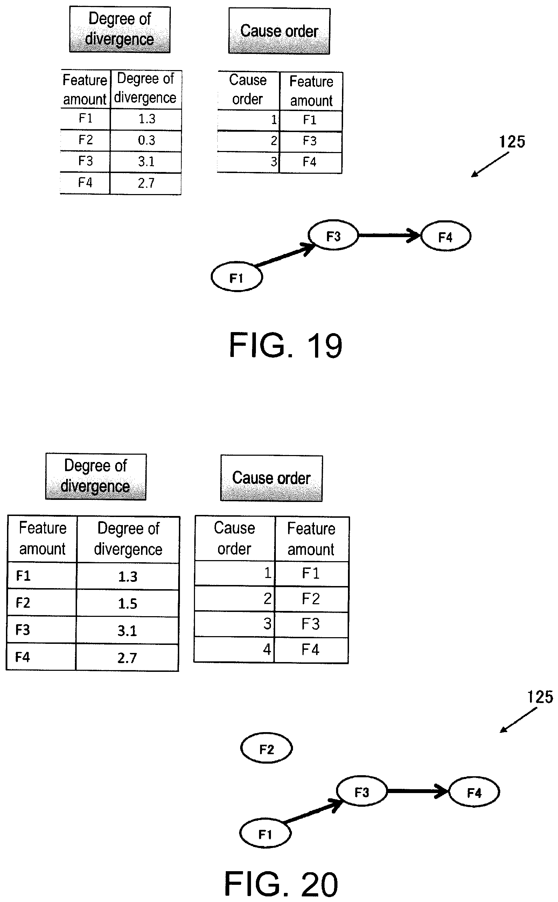

Here, a method for generating the event causal model will be described in detail with reference to Figure 18 to Figure 20. Figure 18 is a diagram showing an example of a procedure for generating an event causal model, and Figure 19 and Figure 20 are examples of event causal models.

(Step S2701)

First, in step S2701, the control unit 11 calculates the degree of divergence between the feature amount of normal period acquired in step S203 and the feature amount of abnormal period acquired in step S205. The degree of divergence indicates the degree of difference between corresponding feature amount in the states of normal period and abnormal period. The degree of divergence may be calculated using, for example, the average difference, the median difference, the KL distance, or the like. For example, the degree of divergence as shown in Figure 19 is calculated.

(Step S2702)

In step S2702, the control unit 11 selects an edge by comparing the directed graph information 122 of normal period acquired in step S204 with the directed graph information 123 of the feature amount of abnormal period acquired in step S206. For example, an edge whose strength has changed significantly between the graph information 122 and 123, or an edge that exists in one but does not exist in the other may be selected.

(Step S2703)

In step S2703, the control unit 11 selects nodes. Here, nodes whose degree of divergence calculated in step S2701 is larger than a predetermined threshold value are selected. Thus, an event causal model 125 when an abnormality occurs is generated from the selected edges and nodes, as shown in Figure 19, for example. From this event causal model 125, it may be seen that the mechanisms that cause an abnormality to occur are F1, F3, and F4. Moreover, the processing of step S2703 may also be performed before step S2702.

(Step S2704)

In step S2704, the control unit 11 orders the abnormality cause candidates from the event causal model generated in S2703. An example of this cause order is shown in Figure 19. Thus, in the event causal model 125 shown in Figure 19, an abnormality may be resolved by performing maintenance in the order of F1, F3, and F4 according to the direction of the edge. Thus, the abnormality cause order may be calculated according to the direction of the nodes and edges appearing in the event causal model 125. However, if there are nodes that are not connected by an edge in the event causal model, the cause order may be calculated by the order based on the above constraint model, or the order based on the degree of divergence and the constraint model. For example, an event causal model as shown in Figure 20 may be generated.

<4-3. Control causal model generation module>

<4-3-1. Configuration of Control Causal Relationship Generation Module>

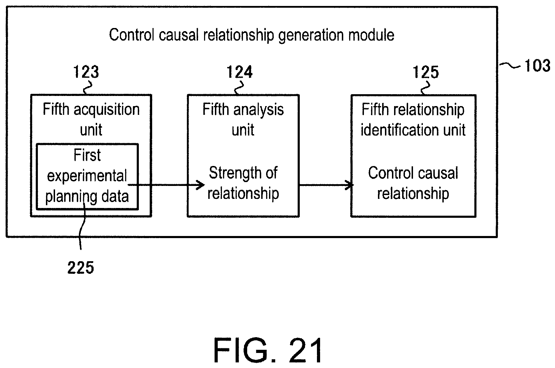

Next, the control causal relationship module 103 will be described. The control causal relationship model 103 creates a new causal relationship by applying the experimental planning data used when determining conditions for starting up the production line 3 to the above constraint model. Here, this new causal relationship is called a control causal relationship model. As shown in Figure 21, the control causal model generation module 103 further has a fifth acquisition unit 123, a fifth analysis unit 124, and a fifth relationship identification unit 125 as functional blocks.

The fifth acquisition unit 123 acquires first experimental planning data 225 when starting up the production line 3. The first experimental planning data 225 is data relating to an experimental planning when determining conditions for operating the production line 3, and is, for example, data for starting up the production line 3 while changing the adjustment amount of various adjustment items in order to achieve a desired quality. Such first experimental planning data is stored in, for example, the process analysis device 1 or an external database. The first experimental planning data 225 corresponds to, for example, state data, quality data, and adjustment item data of each mechanism when the production line 3 of each mechanism 31 is operated, and these include multiple results of changes in adjustment item data. Here, the quality data corresponds to, for example, characteristic inspection results such as image inspection results and resistance values. The adjustment item data corresponds to, for example, set speed, set temperature, arm angle, and the like. The first experimental planning data 225 described here does not necessarily need to be acquired by operating the production line 3 to implement the experimental planning, and data of a production line that has been operated under a plurality of conditions in the past may also be used.

The fifth analysis unit 124 identifies the strength of relationship between the multiple mechanisms 31 by statistically analyzing the acquired first experimental planning data 225. The fifth relationship identification unit 125 identifies causal relationship between the multiple mechanisms 31 in the process carried out on the production line 3 based on the analysis result of the fifth analysis unit 124 and the constraint model described.

<4-3-2. Operation example of the control causal relationship generation module>

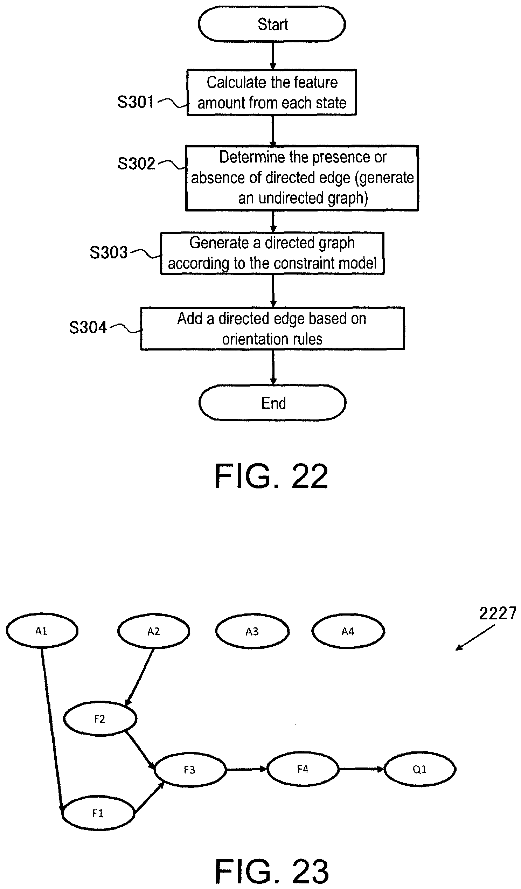

Next, an operation example of the control causal relationship generation module will be described with reference to Figure 22. Figure 22 illustrates an example of the processing procedure of the control causal model generation module.

[Step S301]

First, in step S301, the control unit 11 operates as the fifth acquisition unit 123 and acquires the feature amount of each state from the above first experimental planning data 225. When the acquisition of the feature amount is completed, the control unit 11 advances the processing to the next step S302.

[Step S302]

In steps S302 and S303, the control unit 11 operates as the fifth analysis unit 124, and identifies the strength of relationship between the multiple mechanisms 31 in the production line 3 by statistically analyzing the feature amount acquired in step S301. That is, the presence or absence of directed edge is determined and an undirected graph is generated. In determining whether or not there is a directed edge, a partial correlation coefficient is derived and threshold value processing is performed to determine whether or not there is conditional independence. The analysis performed here may be performed by the same method as the analysis processing of the above state data 222.

[Step S303]

In step S304, the control unit 11 operates as the fifth relationship identification unit 125. That is, the control unit 11 identifies the causal relationship between the multiple mechanisms 31 in the process carried out on the production line 3 based on the above constraint model described and the strength of relationship between the multiple mechanisms 31 in the production line 3 identified in step S302.

In this embodiment, by applying the order relationship of each mechanism 31 identified in the above constraint model to the undirected graph information constructed in the above step S302, the control unit 11 creates directed graph information 2227 indicating the causal relationship between the mechanisms 31 as shown in Figure 23, for example. The directed graph information 2227 includes adjustment item data A and quality data Q described above. The method for creating this directed graph information 2227 is as described above.

[Step S304]

Finally, a directed edge is added based on an orientation rule as needed. The orientation rule means, for example, when a certain partially directed graph is given, an edge is added according to the following three rules.

(1) In three nodes X, Y, Z in a partially directed graph, when there is an edge directed from X to Y, Y and Z are adjacent by an undirected edge, and there is no edge between X and Z, an edge directed from Y to Z is added.
(2) In the three nodes X, Y, Z in a partially directed graph, when there is an edge directed from X to Y and from Y to Z, and X and Z are adjacent by an undirected edge, an edge directed from X to Z is added.
(3) In the three nodes X, Y, Z, and W in a partially directed graph, when there is an edge respectively directed from Y and W to Z, and X and Y, Z, and W are adjacent by undirected edges, an edge directed from X to Z is added.

Thus, a control causal relationship model is generated.

<4-4. Quality adjustment causal model generation module>

<4-4-1. Configuration of quality adjustment causal model generation module>

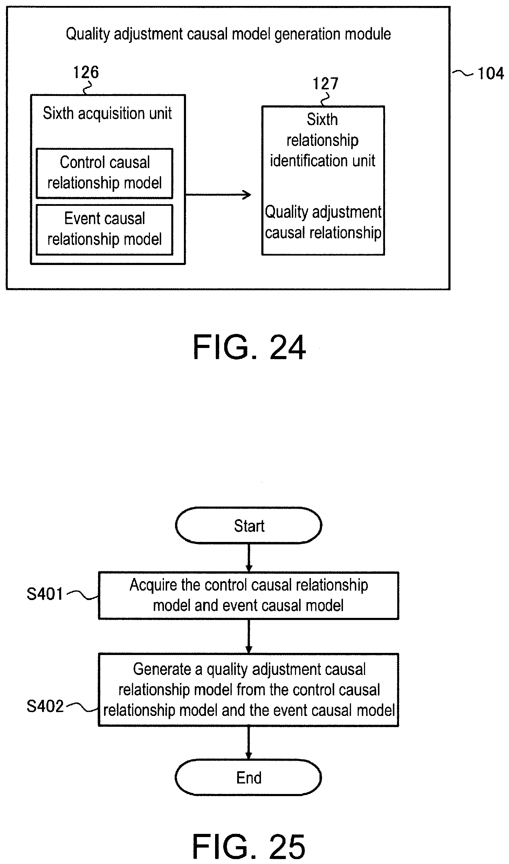

Next, the quality adjustment causal relationship module 103 will be described. The quality adjustment causal relationship model is created from the above control causal relationship model and event causal relationship model, and has a function of narrowing down adjustment items when an abnormality occurs. As shown in Figure 24, the quality adjustment causal generation module 103 further has a sixth acquisition unit 126 and a sixth relationship identification unit 127 as functional blocks.

<4-4-2. Operation example of the quality adjustment causal relationship generation module>

Next, an operation example of the quality adjustment causal relationship generation module will be described with reference to Figure 25. Figure 25 illustrates an example of the processing procedure of the quality causal model generation module.

[Step S401]

In step S401, the control unit 11 operates as the sixth acquisition unit 126 and acquires the above control causal relationship model and event causal relationship model from the storage unit 12. When the acquisition of these models is completed, the control unit 11 advances the processing to the next step S402.

[Step S402]

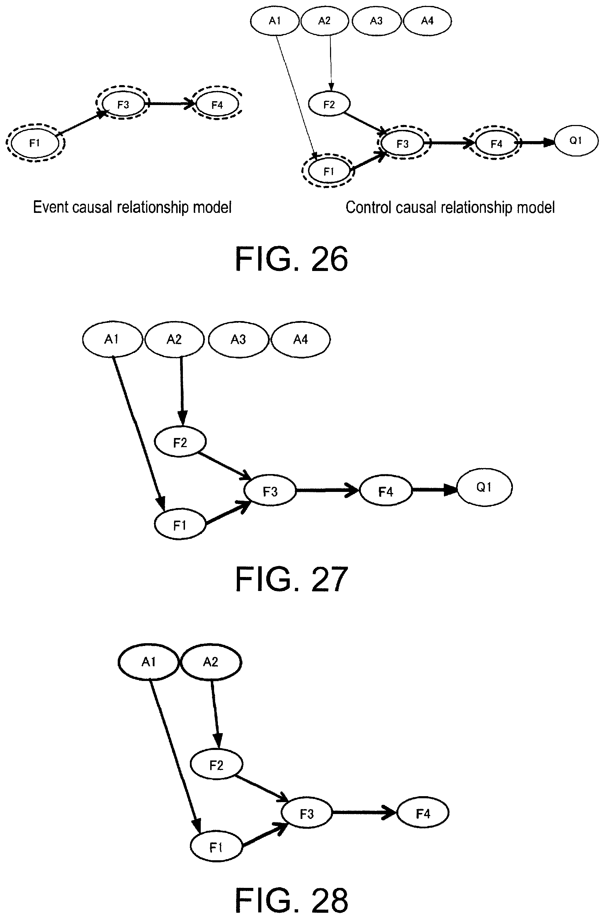

In step S402, the control unit 11 operates as the sixth relationship identification unit 127 and generates a quality adjustment causal relationship model from the control causal relationship model and the event causal relationship model. This will be described with reference to Figure 26 to Figure 28. Figure 26 shows a control causal relationship model and an event causal model. Also, among the nodes of the control causal relationship model, the nodes common to the event causal relationship model are selected. For example, in the example of Figure 26, the mechanism F1, the mechanism F3, and the mechanism F4 are common nodes. That is, the mechanism F1, the mechanism F3, and the mechanism F4 are the nodes in which an abnormality occurs. Here, as an example, it is assumed that the mechanism F4 is a sensor for monitoring quality, and its feature amount relates to quality Q1.

Next, as shown in Figure 27, adjustment item data that affects the state data of the event causal relationship model is selected while tracing the causal relationship. For example, in the control causal relationship model of Figure 27, among the edges connected to the mechanism F1, the adjustment item connected to the upstream side of the mechanism F1 is A1. Similarly, among the edges connected to the mechanism F2, the adjustment item connected to the upstream side of the mechanism F2 is A2. Following this, the nodes and edges selected in Figure 26 and Figure 27 are extracted as shown in Figure 28. As a result, the adjustment items for quality abnormality are specified. In other words, it is clearly shown that adjusting adjustment items A1 and A2 affect the quality-related feature amount of the mechanism F4 and improves the quality.

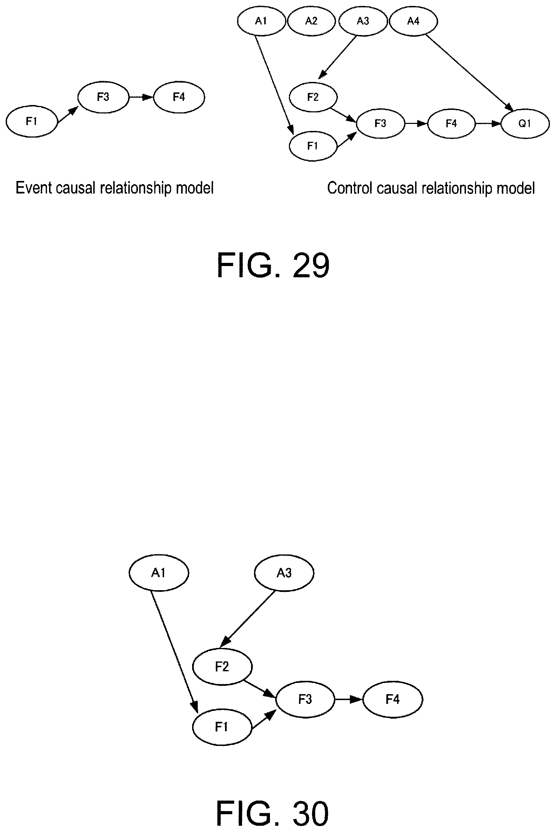

As another example, for example, when an event causal relationship model and a control causal relationship model as shown in Figure 29 are generated, a quality adjustment causal relationship model as shown in Figure 30 is generated.

<4-5. Quality prediction model generation module>

<4-5-1. Configuration of Quality Prediction Model Generation Module>

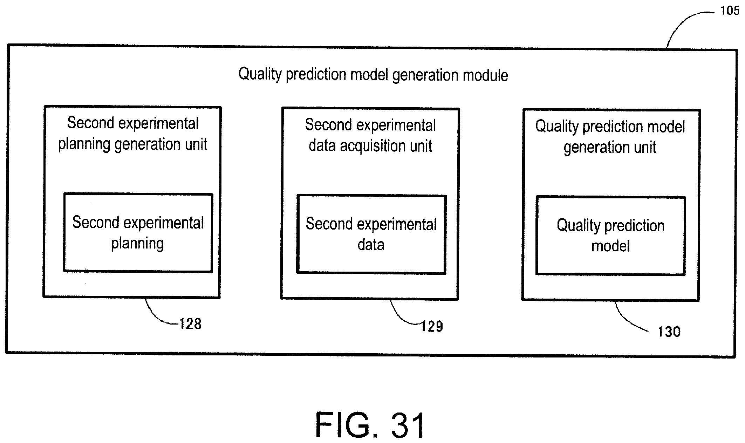

Next, the quality prediction model module will be described. The quality prediction model module 105 is a module that generates a quality prediction model based on the adjustment items identified by the above quality adjustment causal relationship model. As shown in Figure 31, the quality prediction model module 105 further has a second experimental planning generation unit 128, a second experimental data acquisition unit 129, and a quality prediction model generation unit 130 as functional blocks.

<4-5-2. Operation example of the quality prediction model module>

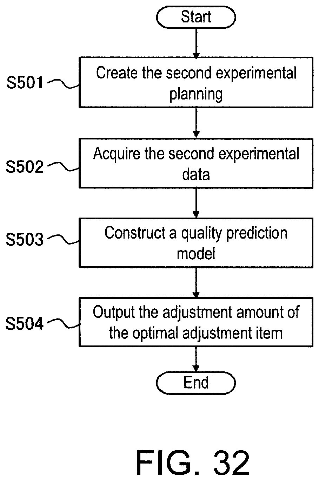

Next, an operation example of the quality prediction model module will be described with reference to Figure 32. Figure 32 illustrates an example of the processing procedure of the quality prediction model generation module.

[Step S501]

In step S501, the control unit 11 operates as the experimental planning generation unit 128. Here, first, the adjustment items are extracted from the quality adjustment causal relationship model generated by the above quality adjustment causal model generation module 104. In the example of Figure 28, since it is identified that the adjustment items A1 and A2 have an influence on the occurrence of an abnormality, while changing the adjustment amount of the adjustment items A1 and A2, an experimental planning is generated for setting conditions for normal operation in the production line 3, that is, for manufacturing products of a predetermined quality.

[Step S502]

In step S502, the control unit 11 operates as the experimental data acquisition unit 129. Here, based on the experimental planning generated in step S501, the production line 3 is operated, and the relationship between the adjustment amount of the adjustment items and the quality of the product is acquired as data. In that case, first, the adjustment items are extracted from the quality adjustment causal relationship model generated by the above quality adjustment causal model generation module 104. In the example of Figure 28, since it is identified that the adjustment items A1 and A2 affect the occurrence of a quality-related abnormality, while adjusting the adjustment amount of the adjustment items A1 and A2, an experimental planning is generated for setting conditions for normal operation in the production line 3. That is, the change in the feature amount of the mechanism F4 when adjustment items A3 and A4 are adjusted is acquired and stored as the second experimental data.

[Step S503]

In step S503, the control unit 11 operates as the quality prediction model generation unit 130. Here, based on the second experimental data generated in step S502, a quality prediction model is generated. The quality prediction model is the modelling of the relationship between the adjustment amount and quality of adjustment items, and is created using, for example, multiple regression model, support vector regression, or the like.

[Step S504]

When the quality prediction model is generated in this way, it is used to derive the optimal adjustment amount that maximizes the quality of the selected adjustment items. For this derivation, for example, Newton's method, Nelder-Mead method, or the like may be used.

<5. Features>

As described above, according to this embodiment, the following effects can be acquired.

(1) In this embodiment, when generating an event causal relationship model, a causal relationship model generated based on data of normal period and a causal relationship model generated based on data of abnormal period are used. This is for the following reasons. For example, a causal relationship model generated using data of abnormal period includes not only the abnormal period causal relationships but also some normal period causal relationships, to be precise. Thus, it is difficult to accurately identify the mechanism in which an abnormality occurs only with a causal relationship model generated using only data from abnormal period. Thus, in this embodiment, by comparing the abnormal period causal relationship model with the normal period causal relationship model, the mechanism involved in the occurrence of an abnormality is accurately identified. Thus, even an unskilled person can identify the case of the abnormality in a short time.

(2) The data of normal period and abnormal period used in generating the above event causal relationship model are basically acquired from the production line 3 that operates according to one setting (one condition) after condition determination. Thus, when the adjustment items are changed, it is difficult to identify the cause of the abnormality or adjust the quality using the created event causal relationship model. Thus, in this embodiment, the control causal relationship model is generated using the first experimental planning data performed before the production line 3 is put into operation. That is, the first experimental planning data includes the conditions under which the production line 3 may be operated through various settings while changing the adjustment amount of the adjustment items during the operation of the production line 3 so as to achieve the target quality. Thus, by using the first experimental planning data, it is possible to generate a constraint causal relationship model corresponding to the adjustment amount of multiple adjustment items.

(3) Then, by using the constraint causal model corresponding to multiple adjustment items and the event causal model, it is possible to generate a quality adjustment causal relationship model capable of identifying the adjustment items that affect quality.

(4) Moreover, by operating the production line 3 while changing the adjustment amount of the identified adjustment items, a second experimental planning data for confirming how the adjustment amount of the adjustment items affects the quality may be generated, and based on this a quality prediction model for predicting the relationship between the adjustment amount of the adjustment items and the quality may be generated. Thereby, the adjustment amount of the adjustment items may be optimized such that the quality reaches the desired standard.

<6. Variation>

Although one embodiment of the present invention has been described in detail above, the present invention is not limited to the above embodiment, and various improvements and modifications may be made without departing from the scope of the invention. It should be noted that the following modified examples and the above embodiment may be appropriately combined.

<6-1>

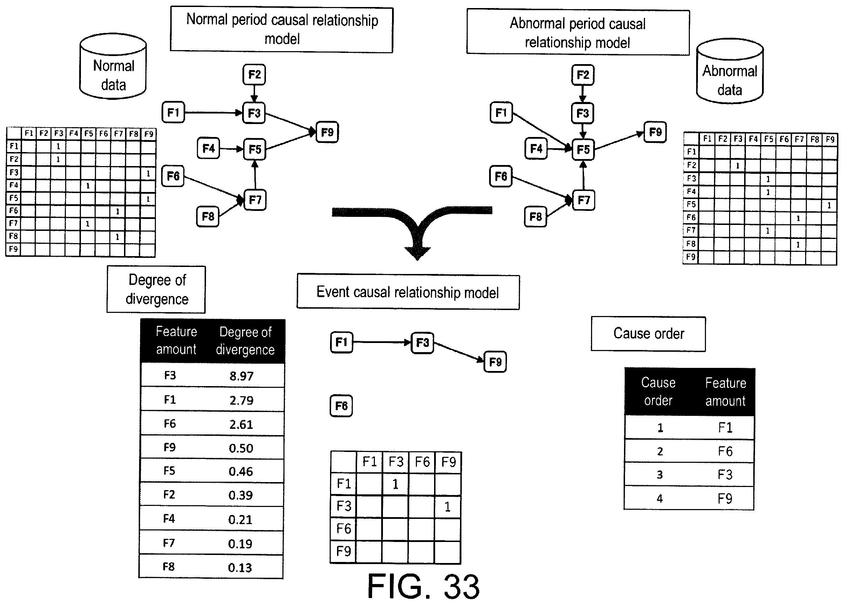

In Figure 14 to Figure 20 of the above embodiment, a simple model was taken as an example, but for a somewhat complicated model with an increased number of nodes, for example, an event causal relationship model may be generated as shown in Figure 33. The method of generating this event causal relationship model is the same as in the above embodiment.

<6-2>

In the above embodiment, although the control program 221 and the mechanism data 223 are analyzed in the constraint model generation module 101, it is also possible to generate a causal relationship using only the analysis of the control program 221 and apply this to the event causal relationship generation module 102. That is, in Figure 5, the second acquisition unit 112 and the second analysis unit 114 may be omitted. Alternatively, it is possible to use only the mechanism data 223 to generate the causal relationship and apply this to the event causal relationship generation module 102. That is, in Figure 5, the first acquisition unit 111 and the first analysis unit 113 may be omitted.

<6-3>

In the event causal generation module 102 of the above embodiment, the constraint model generated in the constraint model generation module 101 is used to generate the event causal relationship, but the constraint model need not always be used.

<6-4>

In the above embodiment, the event causal model is generated by the event causal generation module 102 shown in Figure 11, but it is not limited to this, and the event causal model may be generated by other methods. For example, when selecting a node, a node connected to the selected edge may be selected without using the degree of divergence.
In the event causal generation module 102 of the above embodiment, although the causal relationship is generated using the state data of normal period and the state data of abnormal period, but for example, it is also possible to generate only the causal relationship using the state data of abnormal period. In this case, no causal relationship using the state data of normal period is constructed, but the degree of divergence is calculated from the feature amount calculated by the third analysis unit 118 and the feature amount calculated by the third analysis unit 118, and a node is selected based on the degree of divergence. Then, based on the node, an induced subgraph is generated. This is the event causal relationship model. An induced subgraph is a type of subgraph, one in which some vertices are extracted from a certain graph and the presence or absence of an edge between the vertices matches that of the original graph. For example, the nodes with degree of divergence higher than the predetermined threshold value are selected from the abnormal causal model, and a graph is created in which the nodes and edges included between these nodes are the same as the original abnormal causal model, and used as the event causal relationship model.

<6-5>

In generating the quality prediction model, it is also possible to utilize data acquired at times other than when an abnormality occurs in order to increase the accuracy of the model. That is, in the above embodiment, the model is generated by changing the adjustment amount of the adjustment items that affect the occurrence of an abnormality, but the model may also be generated by changing the adjustment amount by adding adjustment items that have nothing to do with the occurrence of an abnormality.

Reference Signs List

1       Process analysis device
11      Control unit
221     Control program
222     State data
223     Mechanism data
3       Production line
31      Mechanism

**Claims**

1.  A process analysis device, comprising:

    a normal data acquisition unit that acquires a plurality of first state data relating to the normal state of a plurality of mechanisms constituting a production line;
    an abnormality data acquisition unit that acquires a plurality of second state data relating to the state of the plurality of mechanisms when an abnormality occurs;
    a normal period analysis unit that identifies a connection state between the plurality of mechanisms as a first connection state by analyzing the acquired plurality of first state data;
    an abnormal period analysis unit that identifies a connection state between the plurality of mechanisms as a second connection state by analyzing the acquired plurality of second state data;
    a normal period relationship identification unit that identifies a causal relationship between the plurality of mechanisms in a process carried out on the production line as a normal period causal relationship based on the first connection state;
    an abnormal period relationship identification unit that identifies a causal relationship between the plurality of mechanisms in a process carried out on the production line as an abnormal period causal relationship based on the second connection state; and
    a special causal relationship identification unit that compares the normal period causal relationship with the abnormal period causal relationship and identifies the causal relationship between the plurality of the mechanisms involved in the occurrence of an abnormality as a special causal relationship.

2.  The process analysis device according to claim 1,

    wherein the normal period analysis unit and the abnormal period analysis unit respectively: (1) calculate a feature amount from each of the state data, and (2) calculate a correlation coefficient or a partial correlation coefficient between each of the feature amount so as to identify the connection state between the plurality of mechanisms,
    wherein the special causal relationship identification unit:

        calculates a degree of divergence between the feature amount in each of the mechanisms of the normal period causal relationship and the feature amount in each of the mechanisms of the abnormal period causal relationship;
        selects, as a node, a mechanism in which the degree of divergence is larger than a predetermined value;
        selects, as an edge, the connection between the mechanisms when the connection state between the mechanisms satisfies a predetermined condition when comparing the normal period causal relationship and the abnormal period causal relationship; and
        identifies the special causal relationship from the selected node and edge.

3.  The process analysis device according to claim 1 or 2, further comprising:

    a control program acquisition unit that acquires a control program for controlling the operation of the production line;
    a control program analysis unit that identifies an order relationship of the plurality of mechanisms by analyzing the acquired control program; and
    a constraint model generation unit that generates a constraint model of the plurality of mechanisms based on the order relationship of the plurality of mechanisms,
    wherein the special causal relationship identification unit identifies the special causal relationship based on the constraint model.

4. The process analysis device according to claim 3, further comprising:

a mechanism data acquisition unit that acquires mechanism data relating to at least one of a relative positional relationship of devices included in each of the plurality of mechanisms and an order in which the devices are involved in the process; and
a mechanism data analysis unit that identifies a process model that indicates the order relationship of the plurality of mechanisms by analyzing the acquired mechanism data and modelling the process carried out on the production line,
wherein the constraint model generation unit generates the constraint model based on the order relationship of the plurality of mechanisms and the process model.

5. The process analysis device according to claim 3 or 4,
wherein the control program analysis unit identifies the order relationship of the plurality of mechanisms based on log data acquired by operating the production line using the control program.

6. The process analysis device according to claim 5,
wherein the control program analysis unit identifies the order relationship of the plurality of mechanisms by: (1) constructing an abstract syntax tree from the control program, (2) extracting variables and conditional branches relating to each of the mechanisms from the constructed abstract syntax tree, (3) acquiring log data when the production line is operated normally using the control program, and (4) referring to the acquired log data and ordering each of the variables based on an execution result of the conditional branches.

7. The process analysis device according to any one of claims 3 to 6, further comprising:

a first experimental planning data acquisition unit that acquires first experimental planning data for determining an adjustment amount of adjustment items of the production line for achieving a predetermined quality in operating the production line; and
a control causal relationship generating unit that generates, as a control causal relationship, a causal relationship between the adjustment items and the mechanism as well as the causal relationship between the plurality of mechanisms based on the first experimental planning data and the constraint model.

8. The process analysis device according to claim 7, further comprising a quality adjustment causal relationship identification unit that compares the control causal relationship with the special causal relationship and identifies a quality adjustment causal relationship including the causal relationship between the plurality of mechanisms involved in the occurrence of the abnormality and the causal relationship between the mechanism and the adjustment items.

9. The process analysis device according to claim 8, further comprising:

a second experimental planning data acquisition unit that acquires second experimental planning data for determining a relationship between the adjustment amount of the adjustment items identified by the quality adjustment causal relationship and the quality; and
a quality prediction model generation unit that generates a quality prediction model that identifies the relationship between the adjustment amount of the adjustment items and the quality in the production line based on the second experimental planning data.

10. The process analysis device according to claim 9, further comprising:
an adjustment amount calculation unit that calculates an adjustment amount of the adjustment items for achieving a desired quality based on the quality prediction model.

11. The process analysis device according to any one of claims 1 to 10,
wherein each of the state data indicates at least one of torque, speed, acceleration, temperature, current, voltage, air pressure, pressure, flow rate, position, dimensions, area, light intensity, and ON/OFF state.

12. A process analysis method,
wherein a computer executes:

a step of acquiring a plurality of first state data relating to the normal state of a plurality of mechanisms constituting a production line;

a step of acquiring a plurality of second state data relating to the state of the plurality of mechanisms when an abnormality occurs;

a step of identifying a connection state between the plurality of mechanisms as a first connection state by analyzing the acquired plurality of first state data;

a step of identifying a connection state between the plurality of mechanisms as a second connection state by analyzing the acquired plurality of second state data;

a step of identifying a causal relationship between the plurality of mechanisms in a process carried out on the production line as a normal period causal relationship based on the first connection state;

a step of identifying a causal relationship between the plurality of mechanisms in a process carried out on the production line as an abnormal period causal relationship based on the second connection state; and

a step of comparing the normal period causal relationship with the abnormal period causal relationship and identifying the causal relationship between the plurality of the mechanisms involved in the occurrence of an abnormality as a special causal relationship.

13. A process analysis program, causing a computer to execute:

a step of acquiring a plurality of first state data relating to the normal state of a plurality of mechanisms constituting a production line;

a step of acquiring a plurality of second state data relating to the state of the plurality of mechanisms when an abnormality occurs;

a step of identifying a connection state between the plurality of mechanisms as a first connection state by analyzing the acquired plurality of first state data;

a step of identifying a connection state between the plurality of mechanisms as a second connection state by analyzing the acquired plurality of second state data;

a step of identifying a causal relationship between the plurality of mechanisms in a process carried out on the production line as a normal period causal relationship based on the first connection state;

a step of identifying a causal relationship between the plurality of mechanisms in a process carried out on the production line as an abnormal period causal relationship based on the second connection state; and

a step of comparing the normal period causal relationship with the abnormal period causal relationship and identifying the causal relationship between the plurality of the mechanisms involved in the occurrence of an abnormality as a special causal relationship.

FIG. 1

FIG. 2

**FIG. 3**

FIG. 4

Constraint model generation module ~101

111
First acquisition unit
Control program
221

113
First analysis unit
Order relationship

224
Log data

115
First relationship identification unit
Causal relationship

112
Second acquisition unit
Mechanism data
223

114
Second analysis unit
Process model

FIG. 5

Start

S101 — Acquire the control program

S102 — Acquire the mechanism data

S103 — Analyze the control program

S104 — Analyzing the mechanism data

S105 — Create a directed graph indicating the causal relationship between multiple mechanisms

S106 — Output the directed graph

End

FIG. 6

Start analysis processing
of a control program

S1401 — Construct an abstract syntax tree
from the control program

S1402 — Extract variables and operators from
the abstract syntax tree

S1403 — Arrange the variables and operators
extracted in order, and limit the target
to be monitored to the target variables

S1404 — Randomly execute conditional
branches and initialize the ordering of
the variables

S1405 — Operate the production line normally
and acquire log data indicating the
execution result

S1406 — Refer to the log data and order the
variables

End analysis processing
of a control program

FIG. 7

```
if ( a > 0 ) {
  v1 = a;
} else {
  v2 = -a;
}
```
~221

FIG. 8

FIG. 9A

FIG. 9B

Mechanism
data 〜223

|    | F1 | F2 | F3 | F4 |
|----|----|----|----|----|
| F1 | 0  | 0  | 0  | 0  |
| F2 | 0  | 0  | 0  | 0  |
| F3 | 1  | 1  | 0  | 0  |
| F4 | 0  | 0  | 1  | 0  |

〜251

252

F2

F1 → F3 → F4

# FIG. 10

Event causal relationship generation module

116
Third acquisition unit

State data

118
Third analysis unit

Strength of relationship

120
Second relationship identification unit

Causal relationship

122
Fourth relationship identification unit

Causal relationship

Normal period

117
Fourth acquisition unit

State data

119
Fourth analysis unit

Strength of relationship

121
Third relationship identification unit

Causal relationship

Abnormal period

222

222

102

FIG. 11

```
                    ( Start )
                        |
                        v
S201 ──┐  ┌──────────────────────────┐
        └─│  Acquire the state data of  │
          │         normal period        │
          └──────────────────────────┘
                        |
                        v
S202 ──┐  ┌──────────────────────────┐
        └─│  Acquire the state data of  │
          │        abnormal period       │
          └──────────────────────────┘
                        |
                        v
S203 ──┐  ┌──┬────────────────────┬──┐
        └─│  │  Analyze the state data of │  │
          │  │       normal period        │  │
          └──┴────────────────────┴──┘
                        |
                        v
S204 ──┐  ┌──────────────────────────┐
        └─│     Construct a directed graph  │
          │  indicating a causal relationship │
          │  between multiple mechanisms in  │
          │         normal period            │
          └──────────────────────────┘
                        |
                        v
S205 ──┐  ┌──┬────────────────────┬──┐
        └─│  │  Analyze the state data of │  │
          │  │      abnormal period       │  │
          └──┴────────────────────┴──┘
                        |
                        v
S206 ──┐  ┌──────────────────────────┐
        └─│    Construct a directed graph   │
          │  indicating a causal relationship │
          │  between multiple mechanisms in  │
          │        abnormal period           │
          └──────────────────────────┘
                        |
                        v
S207 ──┐  ┌──────────────────────────┐
        └─│  Generate an event causal model │
          └──────────────────────────┘
                        |
                        v
                    ( End )
```

# FIG. 12

Start of analysis processing
of the state data

S2301 — Calculates a feature amount from each
state data

S2302 — Calculate the correlation between each
of the feature amount

S2303 — Construct an undirected graph

End analysis processing
of the state data

# FIG. 13

State data ~ 222

~ 2221

|    | F1  | F2  | F3  | F4  |
|----|-----|-----|-----|-----|
| F1 | ... | ... | 1   | ... |
| F2 | ... | ... | 1   | ... |
| F3 | ... | ... | ... | 1   |
| F4 | ... | ... | ... | ... |

~ 2222

2223

FIG. 14

122

FIG. 15

State data ~222

~2224

|    | F1  | F2  | F3  | F4  |
|----|-----|-----|-----|-----|
| F1 | ... | ... | ... | ... |
| F2 | ... | ... | 1   | ... |
| F3 | ... | ... | ... | ... |
| F4 | ... | ... | ... | ... |

~2225

2226

F2 — F3

F1            F4

# FIG. 16

123

F2 → F3

F1        F4

# FIG. 17

```
           ┌─────────────────────────────┐
           │  Start generation of the event │
           │       causal model            │
           └─────────────────────────────┘
                        │
                        ▼
           ┌─────────────────────────────┐
  S2701 ───│ Calculate the degree of divergence │
           │      of the feature amount    │
           └─────────────────────────────┘
                        │
                        ▼
           ┌─────────────────────────────┐
  S2702 ───│        Select an edge         │
           └─────────────────────────────┘
                        │
                        ▼
           ┌─────────────────────────────┐
  S2703 ───│        Select nodes           │
           └─────────────────────────────┘
                        │
                        ▼
           ┌─────────────────────────────┐
  S2704 ───│    Calculate the cause order  │
           └─────────────────────────────┘
                        │
                        ▼
           ┌─────────────────────────────┐
           │  End generation of the event  │
           │   causal relationship model   │
           └─────────────────────────────┘
```

# FIG. 18

37

| Degree of divergence | |
| --- | --- |
| Feature amount | Degree of divergence |
| F1 | 1.3 |
| F2 | 0.3 |
| F3 | 3.1 |
| F4 | 2.7 |

| Cause order | |
| --- | --- |
| Cause order | Feature amount |
| 1 | F1 |
| 2 | F3 |
| 3 | F4 |

125

## FIG. 19

| Degree of divergence | |
| --- | --- |
| Feature amount | Degree of divergence |
| F1 | 1.3 |
| F2 | 1.5 |
| F3 | 3.1 |
| F4 | 2.7 |

| Cause order | |
| --- | --- |
| Cause order | Feature amount |
| 1 | F1 |
| 2 | F2 |
| 3 | F3 |
| 4 | F4 |

125

## FIG. 20

Control causal relationship generation module

123　　　　　　　　124　　　　　　　　125　　　　　～103

Fifth acquisition
unit

First
experimental
planning data

Fifth analysis
unit

Strength of
relationship

Fifth relationship
identification unit

Control causal
relationship

225

# FIG. 21

Start

S301 — Calculate the feature amount from each state

S302 — Determine the presence or absence of directed edge (generate an undirected graph)

S303 — Generate a directed graph according to the constraint model

S304 — Add a directed edge based on orientation rules

End

# FIG. 22

2227

A1    A2    A3    A4

F2

F1    F3 → F4 → Q1

# FIG. 23

Quality adjustment causal model generation module

126

Sixth acquisition unit

Control causal relationship model

Event causal relationship model

127

Sixth relationship identification unit

Quality adjustment causal relationship

~104

# FIG. 24

Start

S401 — Acquire the control causal relationship model and event causal model

S402 — Generate a quality adjustment causal relationship model from the control causal relationship model and the event causal model

End

# FIG. 25

Event causal relationship model          Control causal relationship model

# FIG. 26

# FIG. 27

# FIG. 28

Event causal relationship model          Control causal relationship model

# FIG. 29

# FIG. 30

EP 4 250 029 A1

105

Quality prediction model generation module

| Second experimental planning generation unit | Second experimental data acquisition unit | Quality prediction model generation unit |
|---|---|---|
| Second experimental planning | Second experimental data | Quality prediction model |
| 128 | 129 | 130 |

FIG. 31

Start

S501 — Create the second experimental
planning

S502 — Acquire the second experimental
data

S503 — Construct a quality prediction
model

S504 — Output the adjustment amount of
the optimal adjustment item

End

FIG. 32

FIG. 33

EP 4 250 029 A1

## INTERNATIONAL SEARCH REPORT

| International application No. |
|---|
| **PCT/JP2021/033820** |

| A. CLASSIFICATION OF SUBJECT MATTER |
|---|
| ***G05B 19/418***(2006.01)i; ***G06N 7/00***(2006.01)i<br>FI: G05B19/418 Z; G06N7/00 150 |
| According to International Patent Classification (IPC) or to both national classification and IPC |

| B. FIELDS SEARCHED |
|---|
| Minimum documentation searched (classification system followed by classification symbols)<br>G05B19/418; G06N7/00 |
| Documentation searched other than minimum documentation to the extent that such documents are included in the fields searched<br>Published examined utility model applications of Japan 1922-1996<br>Published unexamined utility model applications of Japan 1971-2021<br>Registered utility model specifications of Japan 1996-2021<br>Published registered utility model applications of Japan 1994-2021 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2018-206362 A (OMRON TATEISI ELECTRONICS CO) 27 December 2018 (2018-12-27)<br>entire text, all drawings | 1-13 |
| A | JP 2016-122332 A (TOSHIBA CORP) 07 July 2016 (2016-07-07)<br>entire text, all drawings | 1-13 |
| A | JP 2018-181158 A (HITACHI LTD) 15 November 2018 (2018-11-15)<br>entire text, all drawings | 1-13 |
| A | JP 2020-149303 A (OMRON TATEISI ELECTRONICS CO) 17 September 2020 (2020-09-17)<br>entire text, all drawings | 1-13 |
| A | JP 2011-81697 A (HITACHI LTD) 21 April 2011 (2011-04-21)<br>entire text, all drawings | 1-13 |
| A | JP 2019-528426 A (BERG LLC) 10 October 2019 (2019-10-10)<br>entire text, all drawings | 1-13 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/033820**

| Patent document cited in search report | | | Publication date (day/month/year) | Patent family member(s) | | | Publication date (day/month/year) |
|---|---|---|---|---|---|---|---|
| JP | 2018-206362 | A | 27 December 2018 | US entire text, all drawings CN | 2018/0348728 108983710 | A1 A | |
| JP | 2016-122332 | A | 07 July 2016 | (Family: none) | | | |
| JP | 2018-181158 | A | 15 November 2018 | US entire text, all drawings | 2018/0307219 | A1 | |
| JP | 2020-149303 | A | 17 September 2020 | (Family: none) | | | |
| JP | 2011-81697 | A | 21 April 2011 | US entire text, all drawings WO | 2012/0271587 2011/043108 | A1 A1 | |
| JP | 2019-528426 | A | 10 October 2019 | US entire text, all drawings WO | 2020/0185063 2017/214068 | A1 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018181158 A